# EUROPEAN PATENT SPECIFICATION

(11) **EP 4 696 093 B1**
(45) Date of publication and mention of the grant of the patent: **18.11.2026**
(21) Application number: 24720924.0
(22) Date of filing: 11.04.2024
(51) Int. Cl.: H04W 74/0833

(54) **METHODS AND APPARATUSES FOR OPTIMIZED REPORTING OF FAILED RANDOM ACCESS MESSAGE TRANSMISSIONS IN UNLICENSED SPECTRUM**
VERFAHREN UND VORRICHTUNGEN ZUR OPTIMIERTEN MELDUNG VON FEHLGESCHLAGENEN DIREKTZUGRIFFSNACHRICHTENÜBERTRAGUNGEN IN EINEM UNLIZENZIERTEN SPEKTRUM
PROCÉDÉS ET APPAREILS POUR L'ÉTABLISSEMENT OPTIMISÉ DE RAPPORTS DE TRANSMISSIONS DÉFAILLANTES DE MESSAGES D'ACCÈS ALÉATOIRE DANS UN SPECTRE SANS LICENCE

(30) Priority: 14.04.2023 US 202363459298 P
(43) Date of publication of application: 18.02.2026
(73) Proprietor: Telefonaktiebolaget LM Ericsson (publ), 164 83 Stockholm (SE)
(72) Inventor: BELLESCHI, Marco, 171 55 SOLNA (SE); RAMACHANDRA, Pradeepa, 589 29 LINKÖPING (SE); LUNARDI, Luca, 16121 GENOVA (IT); PARICHEHREHTEROUJENI, Ali, 583 34 LINKÖPING (SE); RUNE, Johan, 181 29 LIDINGÖ (SE)
(74) Representative: Ericsson
(86) International application number: PCT/SE2024/050346
(87) International publication number: WO 2024/215242

(56) References cited:
- US-A1- 2022 353 914
- US-A1- 2023 007 686

## Description

### TECHNICAL FIELD

Embodiments described herein relate to a method for a user equipment, a method for a network node, a user equipment and a network node for reporting failed random access message transmissions in unlicensed spectrum.

### BACKGROUND

### Self-Organising Networks (SON) in 3GPP

A Self-Organizing Network (SON) is an automation technology designed to make the planning, configuration, management, optimization and healing of mobile radio access networks simpler and faster. SON functionality and behavior has been defined and specified in generally accepted mobile industry recommendations produced by organizations such as 3GPP (3rd Generation Partnership Project) and the NGMN (Next Generation Mobile Networks).

In 3GPP, the processes within the SON area are classified into Self-configuration process and Self-optimization process. Self-configuration process is the process where newly deployed nodes are configured by automatic installation procedures to get the necessary basic configuration for system operation.

The self-configuration process works in a pre-operational state. A pre-operational state is understood as the state from when the base station (e.g. eNB) is powered up and has backbone connectivity until the radio frequency (RF) transmitter is switched on.

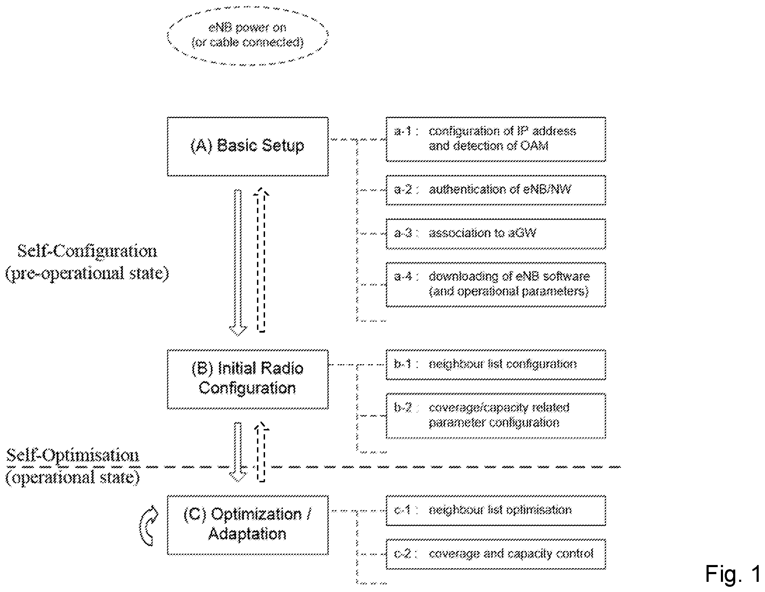

**Figure** 1 illustrates ramifications of Self-Configuration /Self-Optimization functionality (from 3GPP TS 36.300 figure 22.1-1). As illustrated in Figure 1, functions handled in the pre-operational state may comprise: Basic Setup; and Initial Radio Configuration, and may be covered by the Self Configuration process.

A self-optimization process is defined as the process where user equipment (UE) and access node measurements and performance measurements are used to auto-tune the network. The self-optimization process works in an operational state. An operational state is understood as the state where the RF interface is additionally switched on.

As illustrated in Figure 1, functions handled in the operational state may comprise: Optimization / Adaptation, and may be covered by the Self Optimization process.

In LTE, support for Self-Configuration and Self-Optimisation is specified, as described in 3GPP TS 36.300 **v17.4.0** section 22.2, including features such as Dynamic configuration, Automatic Neighbour Relation (ANR), Mobility load balancing, Mobility Robustness Optimization (MRO), RACH optimization and support for energy saving.

In NR, support for Self-Configuration and Self-Optimisation is specified as well, starting with Self-Configuration features such as Dynamic configuration, Automatic Neighbour Relation (ANR) in Rel-15, as described in 3GPP TS 38.300 **v15.4.0** section 15. In NR Rel-16, more SON features are being specified for, including Self-Optimisation features such as Mobility Robustness Optimization (MRO).

### Mobility Robustness Optimization (MRO) in 3GPP

Seamless handovers are a key feature of 3GPP technologies. Successful handovers ensure that the UE moves around in the coverage area of different cells without causing too many interruptions in the data transmission. However, there will be scenarios when the network fails to handover the UE to the 'correct' neighbor cell in time and, in such scenarios, the UE may declare a radio link failure (RLF) or Handover Failure (HOF).

Upon HOF and/or RLF, the UE may take autonomous actions e.g. trying to select a cell and initiate reestablishment procedure to ensure that the UE is trying to get back to connected as soon as it can, so that it can be reachable again. The RLF will cause a poor user experience as the RLF is declared by the UE only when it realizes that there is no reliable communication channel (radio link) available between itself and the network. Also, reestablishing the connection requires signaling with the newly selected cell (random access procedure, Radio Resource Control (RRC) Reestablishment Request, RRC Reestablishment RRC Reestablishment Complete, RRC Reconfiguration and RRC Reconfiguration Complete) and adds some latency, until the UE can exchange data with the network again.

According to the specifications (3GPP TS 36.331), the possible causes for the radio link failure could be one of the following:
Expiry of the radio link monitoring related timer T310;
Expiry of the measurement reporting associated timer T312 (not receiving the handover command from the network within this timer's duration despite sending the measurement report when T310 was running);
Reaching the maximum number of Radio Link Control (RLC) retransmissions; and
Receiving a random access problem indication from the MAC entity.

As RLF leads to reestablishment which degrades performance and user experience, it is in the interest of the network to understand the reasons for RLF and try to optimize mobility related parameters (e.g. trigger conditions of measurement reports) to avoid later RLFs. Before the standardization of MRO related report handling in the network, only the UE was aware of some information associated to how did the radio quality looked like at the time of RLF, what is the actual reason for declaring RLF etc. For the network to identify the reason for the RLF, the network needs more information, both from the UE and also from the neighboring base stations.

As part of the MRO solution in LTE, the RLF reporting procedure was introduced in the RRC specification in Rel-9 RAN2 work. That has impacted the RRC specifications (TS 36.331) in the sense that it was standardized that the UE would log relevant information at the moment of an RLF and later report to a target cell when the UE succeeds to connect (e.g. after reestablishment). This has also impacted the inter-gNodeB interface, i.e., X2AP specifications (3GPP TS 36.423 v 17.4.0), as an eNodeB receiving an RLF report may forward it to the eNodeB where the failure originated.

For the RLF report generated by the UE, the contents have been enhanced with more details in subsequent releases. The measurements included in the measurement report based on the latest LTE RRC specification (3GPP TS 36.331 v 17.4.0) are:
Measurement quantities (Reference Signal Received Power (RSRP), Reference Signal Received Quality (RSRQ)) of the last serving cell (PCell).

Measurement quantities of the neighbor cells in different frequencies of different RATs (EUTRA, UTRA, GERAN, CDMA2000).

Measurement quantity (Received Signal Strength Indicator (RSSI)) associated to WLAN Aps.

Measurement quantity (RSSI) associated to Bluetooth beacons.

Location information, if available (including location coordinates and velocity)

Globally unique identity of the last serving cell, if available, otherwise the PCI and the carrier frequency of the last serving cell.

Tracking area code of the PCell.

Time elapsed since the last reception of the *'Handover command'* message.

C-RNTI used in the previous serving cell.

Whether or not the UE was configured with a DRB having QCI value of 1.

After the RLF is declared, the RLF report is logged and included in the VarRLF-Report and, once the UE selects a cell and succeeds with a reestablishment, it includes an indication that it has an RLF report available in the RRC Reestablishment Complete message, to make the target cell aware of that availability. Then, upon receiving an *UEInformationRequest* message with a flag "rlf-ReportReq-r9" the UE may include the RLF report (stored in a UE variable VarRLF-Report, as described above) in an *UEInformationResponse* message and send to the network.

Based on the RLF report from the UE and the knowledge about with which cell the UE reestablished itself, the original source cell can deduce whether the RLF was caused due to a coverage hole or due to handover associated parameter configurations. If the RLF was deemed to be due to handover associated parameter configurations, the original serving cell can further classify the handover related failure as too-early, too-late or handover to wrong cell classes.

These handover failure classes are explained in brief below.
- *Whether the handover failure occurred due to the 'too-late handover' cases.* The original serving cell can classify a handover failure to be 'too late handover' when the original serving cell fails to send the handover command to the UE associated to a handover towards a particular target cell and if the UE reestablishes itself in this target cell post RLF.
- An example corrective action from the original serving cell could be to initiate the handover procedure towards this target cell a bit earlier by decreasing the CIO (cell individual offset) towards the target cell that controls when the IE sends the event triggered measurement report that leads to taking the handover decision.

*Whether the handover failure occurred due to the 'too-early handover' cases*
- The original serving cell can classify a handover failure to be 'too early handover' when the original serving cell is successful in sending the handover command to the UE associated to a handover however the UE fails to perform the random access towards this target cell.
- An example corrective action from the original serving cell could be to initiate the handover procedure towards this target cell a bit later by increasing the CIO (cell individual offset) towards the target cell that controls when the IE sends the event triggered measurement report that leads to taking the handover decision.

*Whether the handover failure occurred due to the 'handover-to-wrong-cell' cases*
- The original serving cell can classify a handover failure to be 'handover-to-wrong-cell' when the original serving cell intends to perform the handover for this UE towards a particular target cell but the UE declares the RLF and reestablishes itself in a third cell.
- A corrective action from the original serving cell could be to initiate the measurement reporting procedure that leads to handover towards the target cell a bit later by decreasing the CIO (cell individual offset) towards the target cell or via initiating the handover towards the cell in which the UE reestablished a bit earlier by increasing the CIO towards the reestablishment cell.

As an enhancement to MRO in Rel.17, 3GPP introduced the successful HO Report (SHR). Unlike the RLF-Report which is used, as described above, to report the RLF or Handover failure experienced by the UE, the SHR is used by the UE to report various information associated to successful HO. The successful HO will not be reported always at every HO, but only when certain triggering conditions are fulfilled. For example, if while doing HO, the T310/T312/T304 timers exceed a certain threshold, then the UE shall store information associated to this HO. Similarly, in case the HO was a Dual Active Protocol Stack (DAPS) HO, and the UE succeeded with the HO but an RLF was experienced in the source cell while doing the DAPS HO, then the UE stores information associated to this DAPS HO. When storing the successful handover report, the UE may include various information to aid the network to optimize the handover, such as measurements of the neighbouring cells, the fulfilled condition that triggered the successful handover report (e.g. threshold on T310 exceeded, specific RLF issue in the source while doing DAPS HO), etc.

The SHR can be configured by a certain serving cell, and when triggering conditions for SHR logging are fulfilled, the UE stores this information until the NW requests it. In particular, the UE may indicate availability of SHR information in certain RRC message, such as RRCReconfigurationComplete, RRCReestablishmentComplete, RRCSetupComplete, RRCResumeComplete, and the network may request such information via the UEInformationRequest message, upon which the UE transmits the stored SHR in the UEInformationResponse message.

Both the RLF-Report and the SHR may include information associated to the random access procedure. The RLF may be in fact due to random access problems, therefore by including the random access information, the network may optimize the random access procedure and possibly minimize the risk for RLF in future. Similarly, the SHR can also include RA information when the SHR is generated due to problems experienced during the HO, e.g. value of T304 reaching a value above a certain threshold. The RA information includes information related to the BWP in which the random access was attempted, information about the DL pathloss experienced at the time of initiating the random access procedure, information related to each preamble transmission attempt, e.g. whether a contention was experienced or not, the number of preamble transmission attempts in a certain SSB or CSI-RS.

### Channel access procedure in NR unlicensed spectrum

Listen-before-talk (LBT) is designed for unlicensed spectrum to ensure a fair co-existence with other Radio Access Technologies (RATs). In this mechanism, a radio device applies a clear channel assessment (CCA) check (i.e. channel sensing) before any transmission. The transmitter involves energy detection (ED) over a time period compared to a certain threshold (ED threshold) in order to determine if a channel is idle. In case the channel is determined to be occupied, the transmitter performs a random back-off within a contention window before next CCA attempt. In order to protect the ACK transmissions, the transmitter must defer a period after each busy CCA slot prior to resuming back-off. As soon as the transmitter has grasped access to a channel, the transmitter is only allowed to perform transmission up to a maximum time duration (namely, the maximum channel occupancy time (MCOT)).

For Quality of Service (QoS) differentiation, a channel access priority based on the service type has been defined. For example, there are four LBT priority classes are defined for differentiation of contention window sizes (CWS) and MCOT between services. Therefore, the LBT class selected for a transmission depends on the priority of the data to transmit or on the type of signal to transmit, e.g. if that is a PRACH, PUCCH, or Radio Resource Control (RRC) signal.

The LBT procedure may always be performed by any device operating in the unlicensed spectrum, however it is noted that 3GPP specification includes certain procedures that the UE may perform upon detecting an LBT failure. In particular, if the UE is configured by the network with *lbt-FailureRecoveryConfig* the UE may perform certain actions for the detection of consistent uplink LBT failures. In particular, if the UE detects a certain number of configurable LBT failures within a certain configurable time window, then the UE declares consistent LBT failures. The declaration of consistent LBT failures implies the UE switching the BWP in which the UE is operating in the SpCell, and performing the random access in another BWP of the SpCell (if the consistent LBT failure was detected in the SpCell). Otherwise if the consistent LBT failure occurs in the SCell, the UE stops temporarily using the SCell, until subsequent network scheduling decisions. Additionally, when the *lbt-FailureRecoveryConfig,* the UE does not step the random access preamble counter (if the failure was detected in the random access preamble), and it does not perform power ramping. On the other hand, if the *lbt-FailureRecoveryConfig* is not configured, then the UE does not perform consistent LBT failures detection, and if a failure in the RA preamble transmission is detected, the UE steps the random access counter, and it performs power ramping.

### Random access handling in NR-U

As previously mentioned, random access messages (including the PRACH) are subject to LBT before being transmitted. In NR-U, it has been specified an LBT counter which is stepped whenever an UL transmission fails in a certain BWP. When such LBT counter reaches a maximum value, within a certain time, the UE declares "consistent LBT failure" for the corresponding BWP. If the affected BWP is in the PCell or the PSCell, the UE deactivates the affected BWP and activates another already configured BWP in the PCell/PSCell and transmits random access therein. On the other hand, if the affected BWP is an SCell, the UE stops transmitting in this SCell, and can send SR on another serving cell (not yet affected by "consistent UL LBT failures") for further communications. Additionally, as a result of the consistent LBT failure, the UE issues a MAC CE to indicate to the network which are the problematic cells in which "consistent LBT failures" was experienced.

For the case of the PCell, once the UE has attempted random access in all the BWPs in the PCell with no success, the UE declares RLF and may attempt reestablishment. Similarly, for the case of the PSCell, the UE declares SCG failure when consistent UL LBT failures have been experienced in all the BWPs of the PSCell.

Random access information can be reported to the network as part of random access report (RA-Report), RLF reports (RLF-Report), or successful handover report (SHR).

In particular, if a preamble transmission is blocked by LBT, i.e., channel sensed busy at lower layers, then the UE may not increase the preamble transmission counter (*PREAMBLE TRANSMISSION COUNTER*) if the UE is configured with *lbt-FailureRecoveryConfig.* Otherwise, if the UE is not configured with *lbt-FailureRecoveryConfig* then the preamble transmission counter is increased. Additionally, regarding the power ramping, the UE does not increase the transmitting power for one preamble if the previous preamble transmission was blocked by LBT. According to MAC specification, TS 38.321, the UE does not ramp the power for the first preamble transmission upon changing the beam (SSB or CSI-RS) for the RA. Another example is known from US 2023/007686 A1.

### SUMMARY

There currently exist certain challenge(s). The UE is required to include as part of the SON framework, information associated to the random access procedure. This information can be included in random access reports, RLF reports, successful HO reports (SHR), or successful PSCell change/addition report (SPR), or in SCGFailureInformation or MCGFailureInformation in dual connectivity scenarios, etc. In the current 3GPP specification, such random access information does not include information on whether a certain random access procedure was affected by LBT problems (e.g., LBT failure) in particular per transmission attempts of a random access message (e.g. preamble or Msg3). For example, it is not possible for the network to retrieve from the UE, some information on whether a certain preamble transmission was blocked by sensing that the channel busy (e.g. LBT failure), or whether the msg3 or msgA transmission was blocked by LBT.

This implies that, if the network does not know which preambles were blocked by LBT, then the network cannot also retrieve whether the power was ramped from one attempt to the other. This is because according to MAC specification (TS 38.321), the power is ramped for one preamble only if the previous preamble transmission was not blocked by LBT (in other words if a previous transmission attempt of the preamble had a successful LBT). On the other hand, if the previous preamble was blocked by LBT (in other words, the previous transmission attempt of the preamble had a failed LBT), then the power is not ramped. This means that if the network does not know whether a preamble was blocked by LBT or not, then the network cannot know the power used for a certain preamble transmission.

In particular, Section 5.1.3 of 3GPP TS 38.321 v17.4.0 (2023-03) notes:
The MAC entity shall, for each Random Access Preamble:
1> if *PREAMBLE_TRANSMISSION_COUNTER* is greater than one; and
1> if the notification of suspending power ramping counter has not been received from lower layers; and
1> if LBT failure indication was not received from lower layers for the last Random Access Preamble transmission; and
1> if SSB or CSI-RS selected is not changed from the selection in the last Random Access Preamble transmission:
   2> increment *PREAMBLE_POWER_RAMPING_COUNTER* by 1.

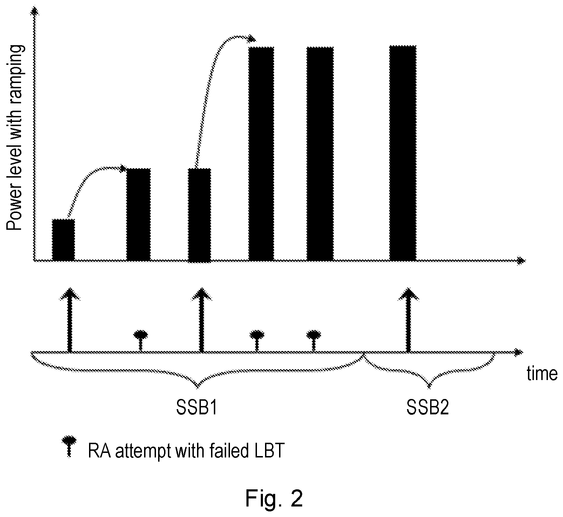

**Figure** 2 illustrates an example of power ramping for a UE performing RA in SSB1 and SSB2.

In the example of Figure 2, the UE performs RA in a first SSB (SSB1) and in a second SSB (SSB2), in which some preamble transmissions passed the LBT (arrow) and some did not (line ending in a circle):
In SSB 1, the UE ramped the power twice, i.e. once after the 1^{st} attempt, i.e. for the 2^{nd} attempt, and once after the 3^{rd} attempt, i.e. for the 4^{th} failed attempt. After another failed attempt, then the UE switches to SSB2 and it keeps the same power used for the 4^{th} attempt. However, if the UE does not log any information on the failed RA attempt in chronological order and just indicates that there have been two successful attempts in SSB1 and one attempt in SSB2, then the network will believe that power used in the 1^{st} attempt in SSB2, is the same power used for the 3^{rd} attempt in SSB 1, which is incorrect.

One approach may be to report as part of the random access information for each of the transmission attempts of a random access message including the ones that were blocked by LBT. However, in the unlicensed system, the overall amount of attempted random access transmissions may be higher than in licensed system, because when the LBT failure recovery configuration (captured in the LBT-FailureRecoveryConfig-r16 IE in RRC) is configured, the random access preambles that were blocked due to LBT failure are not counted as random access preamble transmission attempts at MAC layer, only the ones that passed the LBT (i.e., successful transmission over the air) are counted (by the preamble transmission counter at the MAC layer). Hence, if the UE includes in the random access information each individual transmission attempt of a random access message, both the ones that failed and the ones that passed the LBT, then the overhead (e.g., report size) of the reporting (i.e., RA-Report, RLF-Report, SHR) to be transmitted to the network may significantly grow, there is even a risk that it exceeds the maximum number of RA attempts that may be included in an RA report (which is 200).

The invention is defined by the appended claims.

According to the invention there is therefore provided a method performed by a user equipment. The method comprises transmitting, to a network node, random access information relating to a random access procedure comprising a fourth indication indicating a number of failed transmission attempts of a random access preamble experienced after a last successful transmission attempt of the random access preamble in a first beam before selecting a second beam for preamble transmission in the random access procedure.

According to the invention there is provided a method performed by a network node.

The method comprises receiving from a user equipment, random access information relating to a random access procedure comprising a fourth indication indicating a number of failed transmission attempts of a random access preamble experienced by the user equipment after a last successful transmission attempt of the random access preamble by the user equipment in a first beam before the user equipment selects a second beam for preamble transmission in the random access procedure.

According to the invention there is provided a user equipment. The user equipment is adapted to transmit, to a network node, random access information relating to a random access procedure comprising a fourth indication indicating a number of failed transmission attempts of a random access preamble experienced after a last successful transmission attempt of the random access preamble in a first beam before selecting a second beam for preamble transmission in the random access procedure.

According to the invention there is provided a network node. The network node is adapted to receive from a user equipment, random access information relating to a random access procedure comprising a fourth indication indicating a number of failed transmission attempts of a random access preamble experienced by the user equipment after a last successful transmission attempt of the random access preamble by the user equipment in a first beam before the user equipment selects a second beam for preamble transmission in the random access procedure.

Certain embodiments may provide one or more of the following technical advantage(s).

The overhead required for transmitting random access information related to failed random access transmission attempts is minimized or reduced. Nevertheless, the network may retrieve the random access information a chronological order of each transmission attempt of a random access message, irrespective of whether for the said transmission attempt the LBT was successful or not. The network may also determine if power ramping was performed after a failed random access transmission attempt.

In some embodiments the overhead required for reporting is reduced for the UE but, by using the embodiments described herein, the network would still be able to estimate the transmission power used by the UE for the RA preamble transmission attempts. Based on the provided information network may be able to tune/optimize its PRACH configuration e.g., preamble received target power.

### BRIEF DESCRIPTION OF THE DRAWINGS

For a better understanding of the embodiments of the present disclosure, and to show how it may be put into effect, reference will now be made, by way of example only, to the accompanying drawings, in which:
Fig. 1 illustrates Ramifications of Self-Configuration /Self-Optimization functionality (from 3GPP TS 36.300 figure 22.1-1);
Fig. 2 is an example of power ramping for a UE performing RA in SSB1 and SSB2;
Fig. 3 is a flow chart illustrating a method in accordance with some embodiments;
Fig. 4 is a flow chart illustrating a method in accordance with some embodiments;
Fig. 5 is a flow chart illustrating a method in accordance with some embodiments;
Fig. 6 is a flow chart illustrating a method in accordance with some embodiments;
Fig. 7 is a flow chart illustrating a method in accordance with some embodiments;
Fig. 8 is a flow chart illustrating a method in accordance with some embodiments;
Fig. 9 shows an example of a communication system in accordance with some embodiments;
Fig. 10 shows a UE in accordance with some embodiments;
Fig. 11 shows a network node in accordance with some embodiments; and
Fig. 12 is a block diagram illustrating a virtualization environment in which functions implemented by some embodiments may be virtualized.

### DESCRIPTION

Some of the embodiments contemplated herein will now be described more fully with reference to the accompanying drawings. Embodiments are provided by way of example to convey the scope of the subject matter to those skilled in the art.

The LBT procedure for a transmission of a random access message (e.g. a preamble, or msg3, or msgA transmission) is considered a successful transmission attempt when the channel is not sensed busy (i.e., the detected power in the channel is less than energy detection period for a certain period of time), i.e. LBT successful.

The LBT procedure for a transmission of a random access message (e.g. a preamble, or msg3, or msgA transmission) is considered an unsuccessful transmission attempt when the channel is sensed busy (i.e., the detected power in the channel is above than energy detection period for a certain period of time), i.e. LBT unsuccessful/failure.

Herein, the term successful transmission attempt of a random access message indicates a random access transmission attempt (of a random access message, e.g. a random access preamble, a Msg3 or a MsgA) for which the LBT check was successful, i.e. the UE transmitted the specific random access message over the air interface. However, the random access procedure may still fail afterwards due to e.g. random access response window expiry, or unsuccessful contention resolution.

Herein, the term unsuccessful (or failed) transmission attempt of a random access message indicates a random access transmission attempt (of a random access message, e.g. a random access preamble or a Msg3) for which the LBT check was not successful, i.e. the UE did not transmit the specific random access preamble over the air interface due to a detected busy channel.

Herein methods for the UE to include information in a random access information report are described. The random access information report may be comprised within one of: a random access report (RA-Report), RLF report (RLF-Report) a Successful HO Report (SHR), a successful Primary Secondary Cell, PSCell, addition or change report, a Master Cell Group, MCG, failure information message and Secondary Cell Group, SCG, failure information message.

The methods disclosed herein are applicable both for the cases in which the random access resources selected for random access are associated SSBs or CSI-RSs.

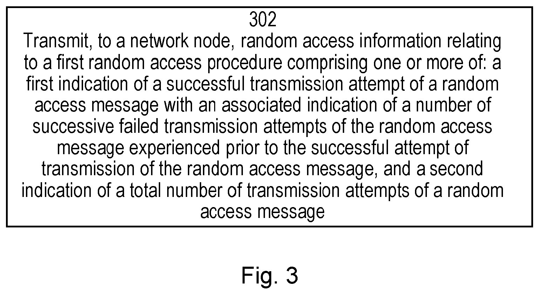

**Figure** 3 illustrates a method in accordance with some embodiments.

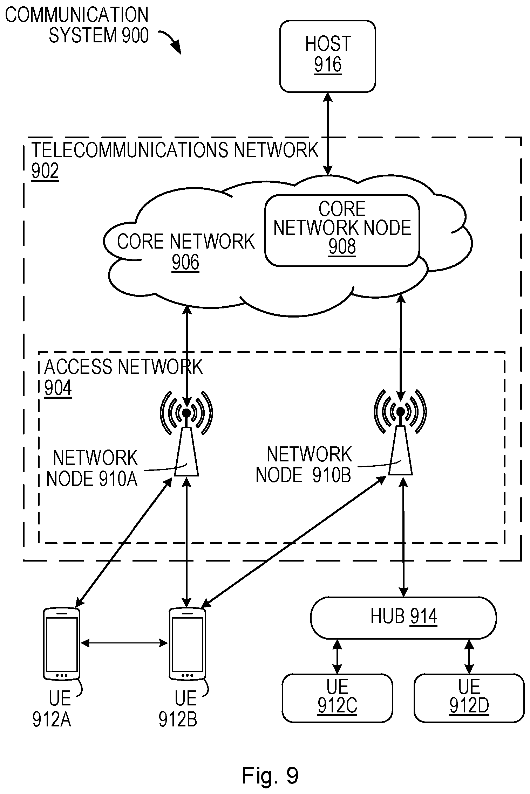

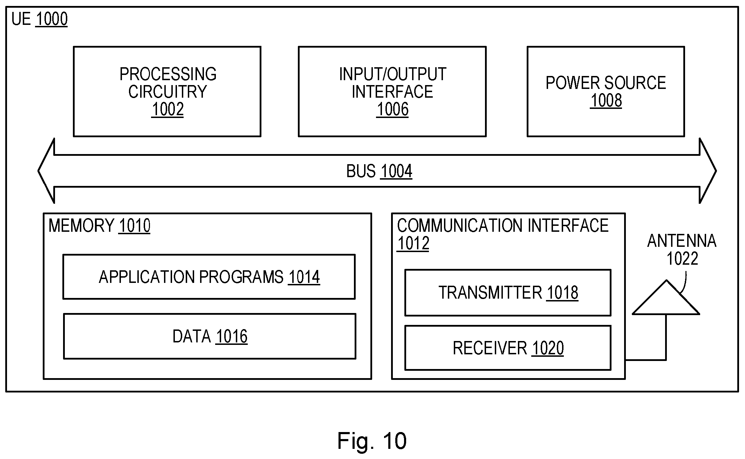

Figure 3 depicts a method in accordance with particular embodiments. The method 3 may be performed by a UE or wireless device (e.g. the UE 912 or UE 1000 as described later with reference to Figures 9 and 10 respectively). The method may be for providing random access information to a network node. The method begins at step 302 with transmitting, to a network node, random access information relating to a first random access procedure comprising one or more of: a first indication of a successful transmission attempt of a random access message with an associated indication of a number of successive failed transmission attempts of the random access message experienced prior to the successful attempt of transmission of the random access message, and a second indication of a total number of transmission attempts of a random access message.

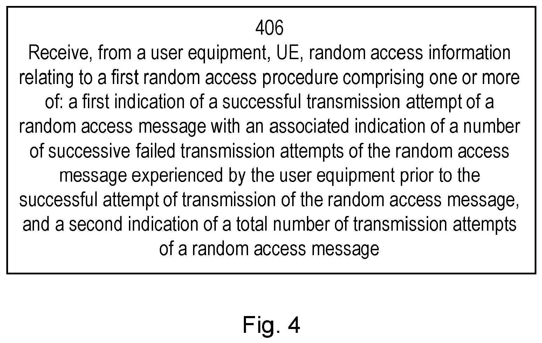

**Figure** 4 illustrates a method in accordance with some embodiments.

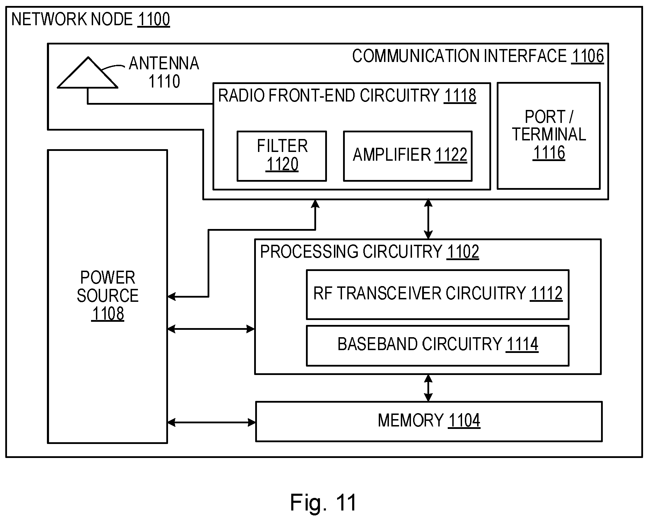

Figure 4 depicts a method in accordance with particular embodiments. The method 4 may be performed by a network node (e.g. the network node 910 or network node 1100 as described later with reference to Figures 9 and 11 respectively). The method begins at step 402 with receiving, from a user equipment, UE, random access information relating to a first random access procedure comprising one or more of: a first indication of a successful transmission attempt of a random access message with an associated indication of a number of successive failed transmission attempts of the random access message experienced by the user equipment prior to the successful attempt of transmission of the random access message, and a second indication of a total number of transmission attempts of a random access message.

In some examples, the first indication in methods 3 or 4 comprises a list of a plurality of successful transmission attempts of respective random access messages. A first set of information may be considered to comprise the first indication and the associated indication. The associated indication may comprise, for each successful transmission attempt of a respective random access message, a first field representing the number of successive failed transmission attempts experienced prior to the said successful transmission attempt of the respective random access message.

It will be appreciated that, if the first field is absent for particular successful transmission attempt, this may indicate that no failed transmissions of the respective random access message were experienced before the said successful transmission of the respective random access message. The plurality of successful transmission attempts may be listed in the list in chronological order of attempt.

In some examples, the UE may include the associated indication associated with the first indication depending, on whether the UE is configured with the LBT failure recovery configuration or not. In a non-limiting example, the UE executes the step 302 only if the LBT failure recovery configuration was already configured by the network, when the UE performed the random access procedure.

For example, the method Figures 3 of 4 may comprise performing the step of transmitting (or receiving) the random access information responsive to a, Listen before talk, LBT, failure recovery configuration being configured at the UE by the network when the UE performed the first random access procedure.

In another example, the method of Figures 3 or 4 may comprise performing the step of transmitting (or receiving) the random access information responsive to a Listen Before Talk, LBT, failure recovery configuration not being configured at the UE by the network when the UE performed the first random access procedure.

It will be appreciated that the random access message of step 302 or 402 may comprise one of: a random access preamble, a MsgA and a Msg3. The list of the plurality of successful transmission attempts may comprise a mix of successful transmission attempts of: one or more random access preambles, one or more MsgA, and one or more Msg3. In other words, for examples in which the method of 3 involves reporting of the number of successive failed transmission attempts due to LBT failures, method 3 or 4 may involve attempts to transmit a Msg3 or MsgA in a random access procedure instead of or as well as attempts to transmit a random access preamble. Attempts to transmit random access preambles and attempts to transmit Msg3 or MsgA may be mixed in the same random access information (e.g the same random access information transmitted in step 302 or received in step 402).

In some embodiments, the random access information may comprised within an RA report (e.g. an *RA-Report-r16* IE).

In some embodiments, the random access information may comprised within a RLF report (e.g. an *RLF-Report-r16* IE).

In some examples of the method of Figures 3 or 4, the UE is configured with LBT failure recovery configuration, e.g. *LBT-FailureRecoveryConfig.* In another method, the UE is not configured with LBT failure recovery configuration, e.g. *LBT-FailureRecoveryConfig.*

In some examples, the second indication of method of Figures 3 or 4 comprises a second field indicating the total number of random access transmission attempts for the first random access procedure in a selected beam, counting both the successful transmission attempts of the random access message and the failed transmission attempts of the random access message.

In some examples, the UE includes, in the random access information, the second indication depending on whether the UE is configured with the LBT failure recovery configuration or not. In a non-limiting example, the UE executes includes the second indication only if the LBT failure recovery configuration was not configured, when the random access procedure was initiated.

The second indication of a total number of transmission attempts of a random access message in a first random access procedure may comprise a series of information comprising, in chronological order, a first information element representing a number of successive successful transmission attempts of the random access message; and a second information element representing a number of successive failed transmission attempts of the random access message.

For example, the second indication may comprise a first value indicating a number of successive preamble transmissions that passed the LBT check (or that alternatively failed the LBT check), followed by a second value indicating the number of successive preamble transmissions that failed the LBT check (or that alternatively passed the LBT check), followed by a third value with the same purpose as the first value, a fourth value with the same purpose of the second value, etc. In other words, the first information element may comprise the first value and the second information element may comprise the second value.

In some examples, second indication comprises, in chronological order, successive values indicating preamble transmissions that passed the LBT check, followed by a second value indicating the number of successive preamble transmissions that failed the LBT check after the last successfully transmitted preamble, followed by successive values indicating preamble transmissions that passed the LBT check, followed by a fourth value indicating the number of successive preamble transmissions that failed the LBT check after the last successfully transmitted preamble, etc. For example, the first information element may comprise a series of first values, and the second information element may comprise the second value.

It will be appreciated that the second indication may start with either the first information element or the second information element.

For example, the second indication may comprise a series of information comprising, in chronological order, a value indicating the number of successive preamble transmissions that failed the LBT check, successive values indicating preamble transmissions that passed the LBT check, followed by a value indicating the number of successive preamble transmissions that failed the LBT check after the last successfully transmitted preamble, etc.

It will be appreciated that the random access information in the methods of Figures 3 and 4 may further comprise a third indication to indicate a number of successive successful transmission attempts of a random access message for which LBT failure indications was not received by lower layers. For example, the third indication may comprise a modification to the *numberOfPreamblesSentOnSSB* field such that it only lists transmission attempts for which LBT failure indications was not received by lower layers.

It will be appreciated that the UE may be configured with LBT failure recovery configuration, i.e. *LBT-FailureRecoveryConfig.* In another method, the UE may not configured with LBT failure recovery configuration, i.e. *LBT-FailureRecoveryConfig.*

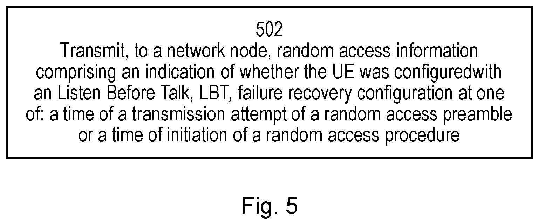

**Figure** 5 illustrates a method in accordance with some embodiments.

Figure 5 depicts a method in accordance with particular embodiments. The method of Figure 5 may be performed by a UE or wireless device (e.g. the UE 912 or UE 1000 as described later with reference to Figures 9 and 10 respectively). The method may be for providing random access information to a network node. The method begins at step 502 with transmitting, to a network node, random access information comprising an indication of whether the UE was configured with an Listen Before Talk, LBT, failure recovery configuration at one of: a time of a transmission attempt of a random access preamble or a time of initiation of a random access procedure.

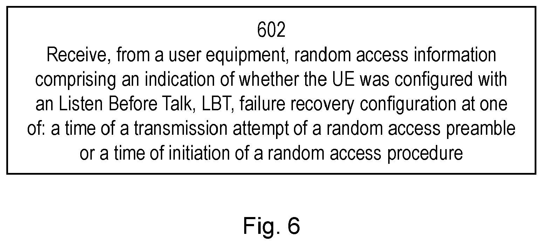

**Figure** 6 illustrates a method in accordance with some embodiments.

Figure 6 depicts a method in accordance with particular embodiments. The method of Figure 6 may be performed by a network node (e.g. the network node 910 or network node 1100 as described later with reference to Figures 9 and 11 respectively). The method begins at step 602 with receiving, from a user equipment, random access information comprising an indication of whether the UE was configured with a Listen Before Talk, LBT, failure recovery configuration at one of: a time of a transmission attempt of a random access preamble or a time of initiation of a random access procedure.

The methods of Figures 5 and 6 provide a mechanism for the UE to include a third field (e.g. the indication of step 502 or 602) indicating whether the UE was configured with LBT failure recovery parameters, i.e. the *LBT-FailureRecoveryConfig-r16* IE, at the time of the random access preamble transmission attempt, or, alternatively, at the time of initiation of the random access procedure. In one method, the said indication is included in the *RA-InformationCommon-r16* IE, in another method in the *RA-Report-r16* IE, or in the *RLF-Report-r16* IE, or in the SHR (e.g. in the *SuccessHO-Report-r17* IE).

In some examples, the method of Figure 5 further comprises logging a number of failed transmission attempts of a random access message preceding a consistent LBT failure. In other words, the UE may log the number of failed preamble transmission attempts preceding a consistent LBT failure. Optionally, this may be extended to also include logging of the number of failed Msg3 transmission attempts preceding a consistent LBT failure.

In some embodiments, the first indication and associated indication or the second indication of the method of 3 or 4 are included in the random access information only when the indication related to *LBT-FailureRecoveryConfig-r16* in the method of 5 or 6 is set to true. In some embodiments, the indication related to *LBT-FailureRecoveryConfig-r16* is not explicitly set but the conditional inclusion of the first indication and associated indication and/or the second indication implies the presence of *LBT-FailureRecoveryConfig-r 16.*

Some embodiments are related to cases where the first random access procedure fails and eventually result in Radio Link Failure being declared at the UE. The random access information to be reported as feedback to the network is then included in an RLF report rather than in an random access report. In such embodiments, as one option, when the LBT failure information the UE reports is related to RLF, i.e. the LBT failure information is included in an RLF report (e.g. the *RLF-Report-r16* IE), the UE may indicate the total number of LBT failures detected in multiple bandwidth parts (BWPs), or the number of LBT failures per BWP, e.g. when the UE has declared RLF after failed RA procedures due to consistent LBT failure in all the BWPs of the bandwidth supported in the cell.

In Figure 4, the network node may determine from the first field (e.g. the associated indication) for each successful transmission attempt performed by the UE the number of successive failed (due to LBT failure) transmission attempts experienced, prior to the said successful random access transmission attempt. Additionally, the network can determine a **first value** which may comprise a sum of the number of successive failures preceding each successful transmission attempt. The first value may therefore comprise a total number of failure attempts made during the first random access procedure prior to the last successful transmission attempt.

In Figure 4, the network node may determine from the second field (e.g. the second indication) a **second value** which is the total number of transmission attempts performed by the UE.

Additionally, by taking the difference between the **first value** and the **second value,** the network can compute a **third** value. The network node may then utilize a third indication e.g. *numberOfPreamblesSentOnSSB* which may be modified to indicate a total number of successful transmission attempts. The difference between the **third value** and the third indication may then give the number of failed random access transmission attempts experienced by the UE **after** the last successful random access transmission attempt experienced for the RA procedure in a BWP.

Consider the following example in which it is assumed that the UE performed RA in a selected beam, say SSB1, wherein the 1's below represent the transmission attempts of a preamble for which LBT was successful (but that could not be completed due to e.g. contention resolution failure), and wherein 0's represent the preamble transmission attempt for which LBT was not successful :
SSB1: 0 0 0 1 1 0 0 1 0 0

From the first field (e.g. the associated indication) included by the UE in the random access information in step 302 or 402, the network may determine that the UE experienced 3 successive LBT failures in the RA preamble before the first transmission success, and 2 failures before the third transmission success. The network may also determine that the UE experienced 5 failures in total (e.g. the **first value)** before the last successful transmission attempt.

From the second field (e.g. the second indication), the network may determine that the UE experienced 10 total transmission attempts (e.g. the **second value).** The third indication may indicate that 3 successful transmission attempts were made, and the network may therefore determine that 7 failed transmission attempts occurred in the RA procedure in the selected beam. Hence the network may determine that the UE experienced 7-5 LBT failures after the last successful transmission attempt.

Referring to the method of Figures 5 and 6, the network can determine if the UE performed preamble power ramping after a random access transmission attempt. If the LBT-*FailureRecoveryConfig-r16* IE is configured, the network determines that no power ramping was performed after a failed (due to LBT failure) random access preamble transmission attempt. Otherwise, if the *LBT-FailureRecoveryConfig-r16* IE is not configured, the network determines that power ramping was performed after each failed random access preamble transmission.

In other words, the method of Figure 6 may further comprise responsive to the indication indicating that the UE was configured with a Listen Before Talk, LBT, failure recovery configuration at one of: a time of a transmission attempt of a random access preamble or a time of initiation of a random access procedure, determining that no power ramping was performed by the UE after a failed transmission attempt of a random access preamble.

The method of Figure 6 may also further comprises responsive to the indication indicating that the UE was not configured with a Listen Before Talk, LBT, failure recovery configuration at one of: a time of a transmission attempt of a random access preamble or a time of initiation of a random access procedure, determining that power ramping was performed by the UE after a failed transmission attempt of a random access preamble.

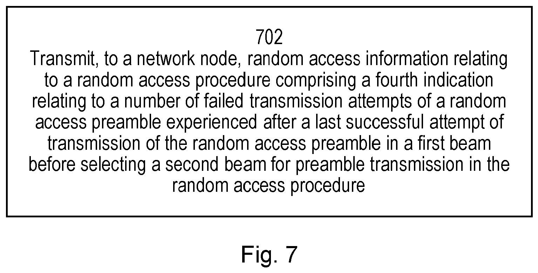

**Figure 7** illustrates a method in accordance with some embodiments.

Figure 7 depicts a method in accordance with the invention. The method of Figure 7 is performed by a UE or wireless device (e.g. the UE 912 or UE 1000 as described later with reference to Figures 9 and 10 respectively). The method provides random access information to a network node. The method begins at step 702 with transmitting, to a network node, random access information relating to a random access procedure comprising a fourth indication relating to a number of failed transmission attempts of a random access preamble experienced after a last successful transmission attempt of the random access preamble in a first beam before selecting a second beam for preamble transmission in the random access procedure. For example, the fourth indication may indicate if there was at least one failed transmission attempt of a random access preamble experienced after a last successful transmission attempt of the random access preamble in a first beam before selecting a second beam for preamble transmission in the random access procedure.

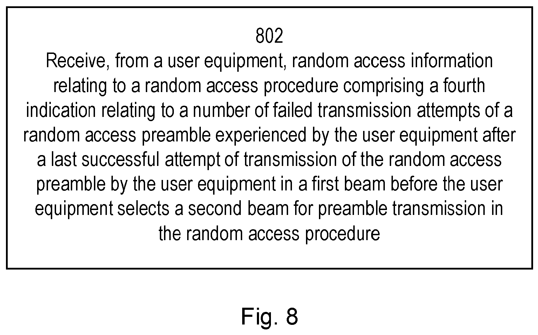

**Figure 8** illustrates a method in accordance with some embodiments.

Figure 8 depicts a method in accordance with the invention. The method of Figure 8 is performed by a network node (e.g. the network node 910 or network node 1100 as described later with reference to Figures 9 and 11 respectively). The method begins at step 802 with receiving from a user equipment, random access information relating to a random access procedure comprising a fourth indication relating to a number of failed transmission attempts of a random access preamble experienced by the user equipment after a last successful transmission attempt of the random access preamble by the user equipment in a first beam before the user equipment selects a second beam for preamble transmission in the random access procedure. For example, the fourth indication may indicate if there was at least one failed transmission attempt of a random access preamble experienced after a last successful transmission attempt of the random access preamble in a first beam before selecting a second beam for preamble transmission in the random access procedure.

The methods of Figures 7 and 8 provide a mechanism for the UE to include a fourth indication related to the LBT failures experienced after the last preamble transmission attempt for which LBT was successful in a first beam (SSB or CSI-RS), before selecting a second beam (SSB or CSI-RS) for preamble transmission of the same RA procedure. The said fourth indication may comprise one or more of:
- A flag indicating if there was at least one LBT preamble failure after the last preamble transmission attempt for which LBT was successful in a first beam (SSB or CSI-RS), before selecting a second beam (SSB or CSI-RS) for preamble transmission. For example, the fourth indication of step 702 or 802 may indicate if there was at least one failed transmission attempt of the random access preamble after the last successful transmission attempt of the random access preamble.
- A flag indicating if the last preamble transmission attempt in a first beam (SSB or CSI-RS) before switching to a second beam (SSB or CSI-RS) was successful in terms of LBT procedure. For example, the fourth indication step 702 or 802 may indicate whether the last successful transmission attempt of the random access preamble was the last transmission attempt of the random access preamble before selecting the second beam.
- A field indicating the number of successive LBT preamble failures after the last preamble transmission attempt for which LBT was successful in a first beam (SSB or CSI-RS), before selecting a second beam (SSB or CSI-RS) for preamble transmission. For example, the fourth indication step 702 or 802 may indicate a number of successive failed transmission attempts of the random access preamble after the last successful transmission attempt of the random access preamble.

In an embodiment including the above fourth indication may be based on the LBT failure recovery configuration.

For example, the UE may include the above fourth indication in, for example, the RA report, only if the LBT failure Recovery configuration is configured. In other words, the UE may perform step 702 responsive to a, Listen before talk, LBT, failure recovery configuration being configured at the UE by the network when the UE performed the random access procedure.

In another embodiment the UE includes the above fourth indication in, for example, the RA report, only if the LBT failure Recovery configuration is NOT configured and the UE does not perform LBT failure recovery operation. In other words, the UE may perform step 702 responsive to a Listen Before Talk, LBT, failure recovery configuration not being configured at the UE by the network when the UE performed the random access procedure.

Alternatively, the UE may include the fourth indication irrespective of whether the LBT failure recovery configuration is configured or not.

The method of Figure 8 may further comprise the network node estimating a preamble transmission power for each of the RA preamble transmissions for which the UE did not experience any LBT issues. For example, if the fourth indication, associated to the last successful transmission attempt of the random access preamble (e.g. for which LBT was successful in a first selected beam), indicates that there was at least one failed transmission attempt of the preamble occurring after the last successful transmission attempt in the first beam, then the network may determine that the power used for a first preamble transmission for which LBT was successful in the second beam has been increased with respect to the last successful transmission attempt in the first beam.

Otherwise, if the fourth indication indicates that no failed transmission attempts occurred after the last successful transmission attempt of the preamble in the first beam, then, as no power ramping occurs when the UE switches beams, the network determines that the power used for the first successful transmission attempt of the preamble in the second beam is the same as the power used for the last successful transmission attempt in the first beam.

Hence, the network can determine the overall number of times the UE performed power ramping before successfully completing the random access procedure, or before failing the random access procedure (i.e. RLF, or HOF). As a consequence, the network may alter some of the parameters of the RACH configuration, e.g. the target received power level (preambleReceivedTargetPower), the power ramping steps for PRACH (powerRampingStep).

### Example implementation of the method of Figures 3 and 4 in ASN.1 code and section 5.7.10.5 in 38.331:

In this example the random access information comprises the first indication with the associated indication but does not comprise the second indication.

For each successful random access attempt performed on a selected beam an entry is included in *perRAAttemptInfoList* in chronological order of attempt, wherein the said entry include a first set of information including at least a field (numberOfSuccessiveLBTFailures) indicating the number of successive random access preamble transmission failures experienced before this successful random access transmission attempt.

The said method can be applied both in case of SSB-based random access, or CSI-RS.

The baseline is 38.331 v17.4.0 and new sections are underlined:

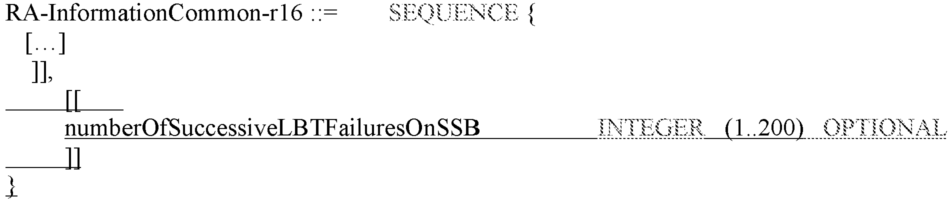

### 5.7.10.5 RA information determination

The UE shall set the content in *ra-InformationCommon* as follows:
1>[...]
   3> set the parameters associated to individual random-access attempt in the chronological order of attempts in the *perRAInfoList* as follows, except the random-access attempts for which LBT failure indication was received from lower layers:
      2> if the random-access resource used is associated to a SS/PBCH block, set the associated random-access parameters for the successive random-access attempts associated to the same SS/PBCH block for one or more random-access attempts as follows:
         3> set the *ssb-Index* to include the SS/PBCH block index associated to the used random-access resource;
         3> set the *numberOfPreamblesSentOnSSB* to indicate the number of successive random-access attempts associated to the SS/PBCH block;
         3> for each random-access attempt performed on the random-access resource, except the random-access attempts for which LBT failure indication was received from lower layers, include the following parameters in the chronological order of the random-access attempt:
            [...]
            6> set the dlRSRPAboveThreshold to false;
               4> set the numberOfSuccessiveLBTFailuresOnSSB to indicate the number of successive random-access attempts for which LBT failure indication was received from lower layers, associated to the SS/PBCH block;
      2> else if the random-access resource used is associated to a CSI-RS, set the associated random-access parameters for the successive random-access attempts associated to the same CSI-RS for one or more random-access attempts as follows:
         3> set the *csi-RS-Index* to include the CSI-RS index associated to the used random-access resource;
         3> set the *numberOfPreamblesSentOnCSI-RS* to indicate the number of successive random-access attempts associated to the CSI-RS.
            NOTE 1: Void.

### A second example implementation of the method of Figure 3 for a UE (device) in ASN.1 code and section 5.7.10.5 in 38.331:

In this example the random access information comprises the second indication. The UE includes for each random access procedure performed in a selected beam of a BWP, the number of random access attempts performed by the UE, counting both the failed and successful random access preamble transmission attempts.

The baseline is 38.331 v17.4.0 and new sections are underlined:

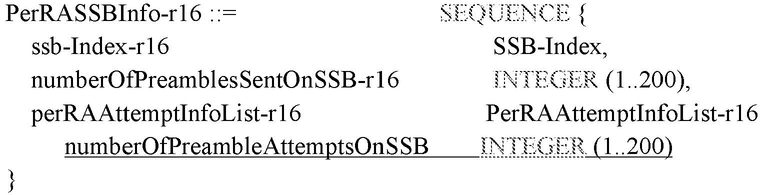

### 5.7.10.5 RA information determination

The UE shall set the content in *ra-InformationCommon* as follows:
[...]
3> set the *numberOfPreamblesSentOnSSB* to indicate the number of successive random-access attempts associated to the SS/PBCH block for which LBT failure indications was not received by lower layers;
3> set the numberOfPreambleAttemptsOnSSB to indicate the number of successive random-access attempts associated to the SS/PBCH block;
3> for each random-access attempt performed on the random-access resource, include the following parameters in the chronological order of the random-access attempt:
   [...]

### Example implementation of the methods of Figure 5 or 6 in ASN.1 code in section 5.7.10.5 of 38.331:

In this example, the third field (e.g. the indication of step 501 or 601) may be represented via Boolean or enumerated value, as follows, wherein the third field is set if the UE is configured for LBT failure recovery (*lbt-FailureRecoveryConfig*)*.*

In some embodiments, this Boolean value is included per UL BWP associated to the RA procedure. The advantage of such an embodiment is that the UE provides detailed indication of *lbt-FailureRecoveryConfig* related configuration when only some UL BWP configurations might include *lbt-FailureRecoveryConfig .*

In some other embodiments, this Boolean value is included only once per RA procedure.

The baseline is 38.331 v17.4.0 and new sections are underlined:

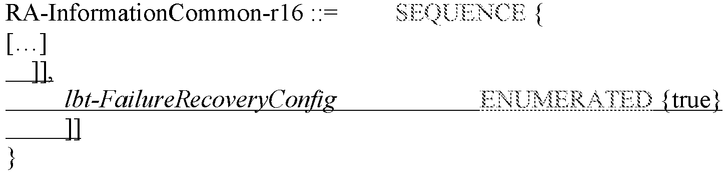

### Example implementation of a combination of the methods of Figures 3 and 4, and the methods of Figures 5 and 6 in ASN.1 code and section 5.7.10.5 of 38.331:

In this example, the UE includes the first indication and associated indication in the random access information (i.e., for each successful random access attempt performed on a selected beam an entry is included in perRAAttemptInfoList in chronological order of attempt, wherein the said entry include a first set of information including at least a field (numberOfSuccessiveLBTFailures) indicating the number of successive random access preamble transmission failures experienced before this successful random access transmission attempt) *only if* the UE is configured with for LBT failure recovery (*lbt-FailureRecoveryConfig*) i.e., when the UE is not configured with *lbt-FailureRecoveryConfig,* the UE does not include any new parameters in the RA information.

The baseline Is 38.331 v17.4.0 and new sections are underlined:

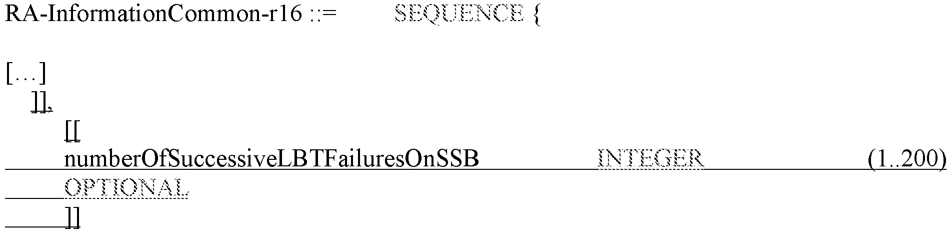

### 5.7.10.5 RA information determination

The UE shall set the content in *ra-InformationCommon* as follows:
3> 1>[...] set the parameters associated to individual random-access attempt in the chronological order of attempts in the *perRAInfoList* as follows, except the random-access attempts for which LBT failure indication was received from lower layers:
   2> if the random-access resource used is associated to a SS/PBCH block, set the associated random-access parameters for the successive random-access attempts associated to the same SS/PBCH block for one or more random-access attempts as follows:
      3> set the *ssb-Index* to include the SS/PBCH block index associated to the used random-access resource;
      3> set the *numberOfPreamblesSentOnSSB* to indicate the number of successive random-access attempts associated to the SS/PBCH block;
      3> for each random-access attempt performed on the random-access resource, except the random-access attempts for which LBT failure indication was received from lower layers, include the following parameters in the chronological order of the random-access attempt:
         4> if the random-access attempt is performed on the contention based random-access resource and if *raPurpose* is not equal to"*requestForOtherS*", include *contentionDetected* as follows:
            5> if contention resolution was not successful as specified in TS 38.321 [6] for the transmitted preamble:
               6> set the contentionDetected to true;
            5> else:
               6> set the contentionDetected to false;
         4> if the random access attempt is a 2-step random access attempt:
            5> if fallback from 2-step random access to 4-step random access occurred during the random access attempt:
               6> set fallbackToFourStepRA to true;
         4> if the random-access attempt is performed on the contention based random-access resource; or
         4> if the random-access attempt is performed on the contention free random-access resource and if the random-access procedure was initiated due to the PDCCH ordering:
            5> if the random access attempt is a 4-step random access attempt and the SS/PBCH block RSRP of the SS/PBCH block corresponding to the random-access resource used in the random-access attempt is above *rsrp-ThresholdSSB;* or
            5> if the random access attempt is a 2-step random access attempt and the SS/PBCH block RSRP of the SS/PBCH block corresponding to the random-access resource used in the random-access attempt is above *msgA-RSRP-ThresholdSSB:*
               6> set the dlRSRPAboveThreshold to true;
            5> else:
               6> set the dlRSRPAboveThreshold to false;
         4> if the *lbt-FailureRecoveryConfig* is configured for the UL bandwidth part associated to the RA resources:
            5> set the numberOfSuccessiveLBTFailuresOnSSB to indicate the number of successive random-access attempts for which LBT failure indication was received from lower layers, associated to the SS/PBCH block;
   2> else if the random-access resource used is associated to a CSI-RS, set the associated random-access parameters for the successive random-access attempts associated to the same CSI-RS for one or more random-access attempts as follows:
      3> set the *csi-RS-Index* to include the CSI-RS index associated to the used random-access resource;
      3> set the *numberOfPreamblesSentOnCSI-RS* to indicate the number of successive random-access attempts associated to the CSI-RS.
         NOTE 1: Void.

### Example implementation of the methods of Figures 7 and 8 for UE device in ASN.1 code and section 5.7.10.5 of 38.331

In this method, the UE reports a fourth indication (e.g. a fourth field) related to a number of LBT failures experienced after the last preamble transmission attempt for which LBT was successful in a first beam (SSB or CSI-RS), before changing the beam (SSB or CSI-RS) for preamble transmission, i.e., before selecting a second beam (SSB or CSI-RS) for preamble transmission of the same RA procedure.

Consider an example in which, for one RA procedure in which the UE performs RA in a first selected beam, SSB1, and then it changes to a second beam for RA, SSB2, and then it changes again to a third beam SSB3, and then finally changes to a fourth beam SSB4 in which the UE finally succeeds to complete the RA.

The 1's below represent the preamble transmission attempts for which LBT was successful (but that could not be completed due to e.g. contention resolution failure), and wherein 0's represent the preamble transmission attempts for which LBT was not successful:
SSB1: 1 0 0 1 0 0
SSB2: 1 0 0 1 0 0 0
SSB3: 1
SSB4: 1

The methods of Figures 7 and 8 imply then that the UE reports a fourth indication relating to the last two failures in SSB1, another fourth indication relating to the last three failures in SSB2 and another fourth indication relating to the lack of LBT failures after the preamble transmission attempt in SSB3.

It will be appreciated that the absence of the field used for the fourth indication may be interpreted as an implicit fourth indication that the number of failed transmission attempts of a random access preamble experienced after a successful attempt of transmission of the random access preamble in a first beam before selecting a second beam for preamble transmission in the random access procedure is zero.

In one example, if the fourth indication indicates the number of successive LBT preamble failures after the last preamble transmission attempt for which LBT was successful, before changing the beam (SSB or CSI-RS) for preamble transmission (numberOfLBTFailuresBeforeBeamChange), then the UE reports fourth indication = '2' for SSB1 and fourth indication = '3' for SSB2 and either the UE does not include the field at all for SSB3 (which would amount to an implicit fourth indication) or includes a value of 0 for SSB3 (explicit fourth indication).

In some examples, if the fourth indication comprises a flag indicating if there was at least one LBT preamble failure after the last preamble transmission attempt for which LBT was successful, before changing the beam (SSB or CSI-RS) for preamble transmission (lbtFailuresBeforeBeamChange), then the UE sets the flag to 'true' for SSB1 and SSB2 and either sets the flag to 'false' for SSB3 (explicit fourth indication) or does not include the flag at all for SSB3 (implicit fourth indication).

In some examples, if the fourth indication comprises a flag indicating whether the last preamble transmission attempt in a first beam (SSB or CSI-RS) before switching to a second beam (SSB or CSI-RS) was successful in terms of LBT procedure (lbtFailureForLastAttemptBeforeBeamChange), then the UE sets the flag to 'true' for SSB1 and SSB2 and either sets the flag to 'false' for SSB3 (explicit fourth indication) or does not include the flag at all for SSB3 (implicit fourth indication).

In one UE implementation, the UE allocates the fourth indication after a first LBT successful preamble transmission in a first beam, and it updates the value of the said fourth indication upon one or more successive failed LBT preamble transmissions in the same first beam. The UE deletes the said fourth indication if the UE performs a second successful LBT preamble transmission in the same first beam, otherwise the UE stores the value of the fourth indication if the UE selects a second beam (SSB or CSI-RS) for the RA preamble transmission.

The stored fourth indication value may be stored in a report, e.g. RLF-Report, RA-Report, SHR, etc., to be transmitted to the network.

The above fourth indication may be as a field within the information associated to the last preamble transmission attempt for which LBT was successful, before changing the beam (SSB or CSI-RS) for preamble transmission. This option is represented in the below specification example in which baseline is 38.331 v17.4.0 and new sections are underlined: 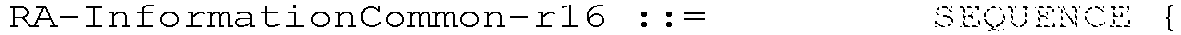 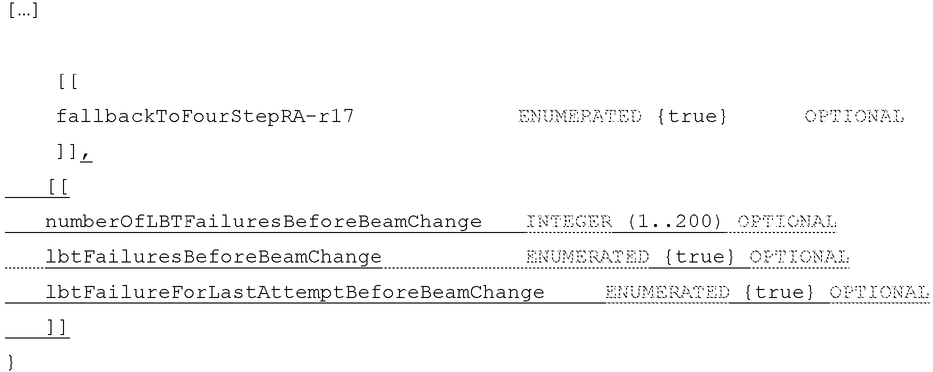
3> The UE shall set the content in *ra-InformationCommon* as follows: set the *absoluteFrequencyPointA* to indicate the absolute frequency of the reference resource block associated to the random-access resources used in the random-access procedure;
   [...]
3> 3> set the *onDemandSISuccess* to *true;* set the parameters associated to individual random-access attempt in the chronological order of attempts in the *perRAInfoList* as follows, except the random-access attempts for which LBT failure indication was received from lower layers:
   2>if the random-access resource used is associated to a SS/PBCH block, set the associated random-access parameters for the successive random-access attempts associated to the same SS/PBCH block for one or more random-access attempts as follows:
      3> set the *ssb-Index* to include the SS/PBCH block index associated to the used random-access resource;
      3> set the *numberOfPreamblesSentOnSSB* to indicate the number of successive random-access attempts associated to the SS/PBCH block;
      3>for each random-access attempt performed on the random-access resource, except the random-access attempts for which LBT failure indication was received from lower layers, include the following parameters in the chronological order of the random-access attempt:
         4>if the random-access attempt is performed on the contention based random-access resource and if *raPurpose* is not equal to"*requestForOtherS*", include *contentionDetected* as follows:
            5>if contention resolution was not successful as specified in TS 38.321 [6] for the transmitted preamble:
               6> set the *contentionDetected* to *true;*
            5> else:
               6> set the *contentionDetected* to *false;*
         4>if the random access attempt is a 2-step random access attempt:
            5> if fallback from 2-step random access to 4-step random access occurred during the random access attempt:
               *6>* set *fallbackToFourStepRA* to *true;*
         4>if the random-access attempt is performed on the contention based random-access resource; or
         4>if the random-access attempt is performed on the contention free random-access resource and if the random-access procedure was initiated due to the PDCCH ordering:
            5>if the random access attempt is a 4-step random access attempt and the SS/PBCH block RSRP of the SS/PBCH block corresponding to the random-access resource used in the random-access attempt is above *rsrp-ThresholdSSB;* or
            5>if the random access attempt is a 2-step random access attempt and the SS/PBCH block RSRP of the SS/PBCH block corresponding to the random-access resource used in the random-access attempt is above *msgA-RSRP-ThresholdSSB:*
               6> set the *dlRSRPAboveThreshold* to *true;*
            5> else:
               6> set the *dlRSRPAboveThreshold* to *false;*
         4> if the random-access attempt is the last random-access attempt in the SS/PBCH block:
            5> set the numberOfLBTFailuresBeforeBeamChange to indicate the number of successive random-access attempts for which LBT failure indication was received from lower layers, before changing the SS/PBCH block for random access preamble transmission;
            5> set lbtFailuresBeforeBeamChange to 'true' if LBT failure indication was received from lower layers for at least one successive random-access attempt.
            5> set lbtFailureForLastAttemptBeforeBeamChange to 'true' if LBT failure indication was received from lower layers for the last random access preamble transmission attempt in the SS/PBCH block before changing the SS/PBCH block for random access preamble transmission.
   2>else if the random-access resource used is associated to a CSI-RS, set the associated random-access parameters for the successive random-access attempts associated to the same CSI-RS for one or more random-access attempts as follows:
      3> set the *csi-RS-Index* to include the CSI-RS index associated to the used random-access resource;
      3> set the *numberOfPreamblesSentOnCSI-RS* to indicate the number of successive random-access attempts associated to the CSI-RS.
         NOTE 1: Void.

In another method, the fourth indication may be included as a field within the information associated to each beam (SSB, or CSI-RS) that the UE selected for RA. In this case, the fourth indication may represent the LBT failures associated to the last preamble transmission attempt for which LBT was successful in a given beam. This option is represented in the below specification example in which the baseline is 38.331 v17.4.0 and new sections are underlined: 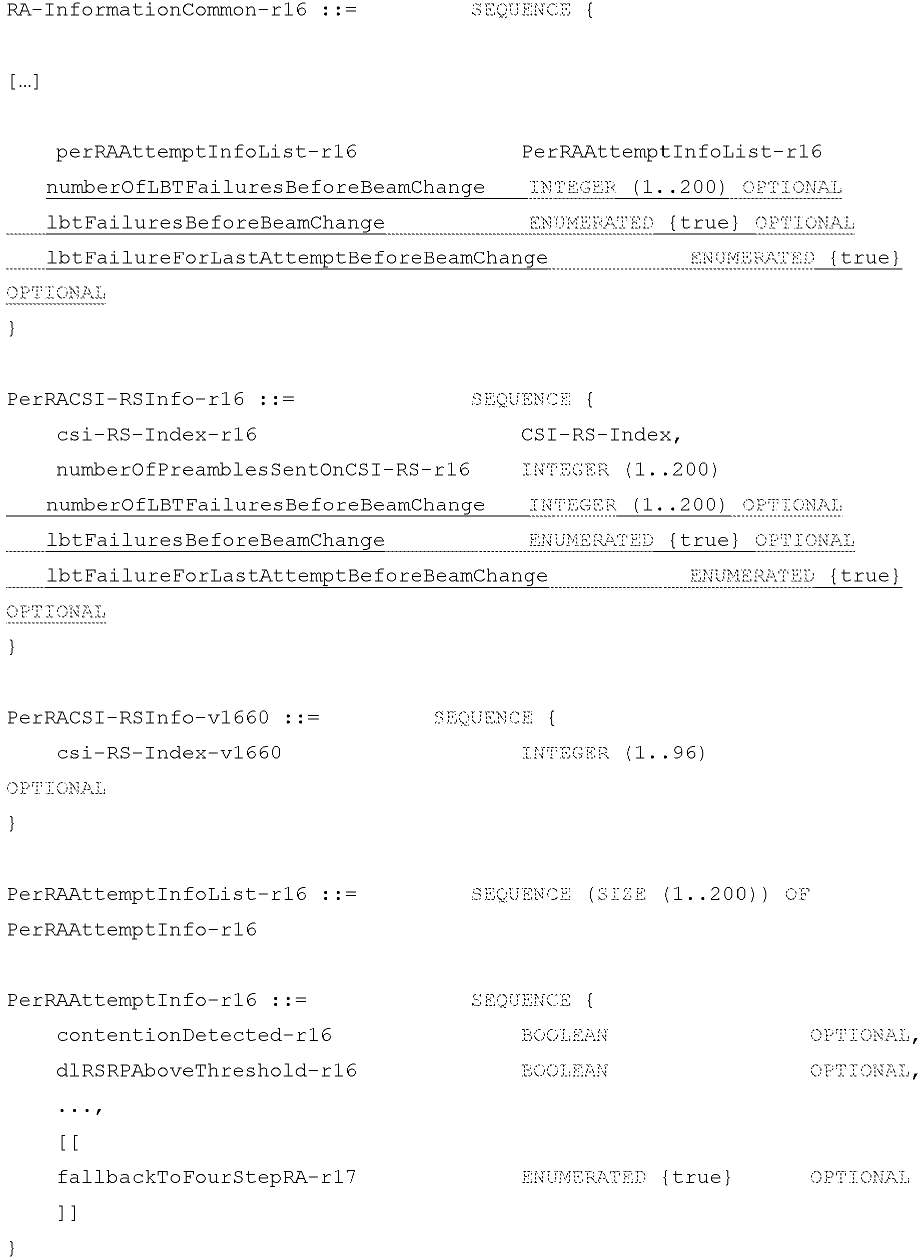
3> The UE shall set the content in *ra-InformationCommon* as follows: set the *absoluteFrequencyPointA* to indicate the absolute frequency of the reference resource block associated to the random-access resources used in the random-access procedure;
   [...]
3> 3> set the *onDemandSISuccess* to *true;* set the parameters associated to individual random-access attempt in the chronological order of attempts in the *perRAInfoList* as follows, except the random-access attempts for which LBT failure indication was received from lower layers:
   2>if the random-access resource used is associated to a SS/PBCH block, set the associated random-access parameters for the successive random-access attempts associated to the same SS/PBCH block for one or more random-access attempts as follows:
      3> set the *ssb-Index* to include the SS/PBCH block index associated to the used random-access resource;
      3> set the *numberOfPreamblesSentOnSSB* to indicate the number of successive random-access attempts associated to the SS/PBCH block;
      3> set the numberOfLBTFailuresBeforeBeamChange to indicate the number of successive random-access attempts for which LBT failure indication was received from lower layers, after the last random-access attempt, before changing the SS/PBCH block for random access preamble transmission, for which LBT failure indication was not received from lower layers;
      3> set lbtFailuresBeforeBeamChange to 'true' if LBT failure indication was received from lower layers for at least one successive random-access attempt after the last random-access attempt, before changing the SS/PBCH block for random access preamble transmission, for which LBT failure indication was not received from lower layers
      3> set lbtFailureForLastAttemptBeforeBeamChange to 'true' if LBT failure indication was received from lower layers for the last random access preamble transmission attempt in the SS/PBCH block before changing the SS/PBCH block for random access preamble transmission.
      3>for each random-access attempt performed on the random-access resource, include the following parameters in the chronological order of the random-access attempt:
         [...]
   2>else if the random-access resource used is associated to a CSI-RS, set the associated random-access parameters for the successive random-access attempts associated to the same CSI-RS for one or more random-access attempts as follows:
      3> set the *csi-RS-Index* to include the CSI-RS index associated to the used random-access resource;
      3> set the *numberOfPreamblesSentOnCSI-RS* to indicate the number of successive random-access attempts associated to the CSI-RS.
      3> set the numberOfLBTFailuresBeforeBeamChange to indicate the number of successive random-access attempts for which LBT failure indication was received from lower layers, after the last random-access attempt, before changing the CSI-RS for random access preamble transmission, for which LBT failure indication was not received from lower layers;
      3> set lbtFailuresBeforeBeamChange to 'true' if LBT failure indication was received from lower layers for at least one successive random-access attempt after the last random-access attempt, before changing the CSI-RS for random access preamble transmission, for which LBT failure indication was not received from lower layers
      3> set lbtFailureForLastAttemptBeforeBeamChange to 'true' if LBT failure indication was received from lower layers for the last random access preamble transmission attempt in the SS/PBCH block before changing the CSI-RS for random access preamble transmission.

NOTE 1: Void.

**Figure 9** shows an example of a communication system 900 in accordance with some embodiments.

In the example, the communication system 900 includes a telecommunication network 902 that includes an access network 904, such as a radio access network (RAN), and a core network 906, which includes one or more core network nodes 908. The access network 904 includes one or more access network nodes, such as network nodes 910a and 910b (one or more of which may be generally referred to as network nodes 910), or any other similar 3^{rd} Generation Partnership Project (3GPP) access nodes or non-3GPP access points. Moreover, as will be appreciated by those of skill in the art, a network node is not necessarily limited to an implementation in which a radio portion and a baseband portion are supplied and integrated by a single vendor. Thus, it will be understood that network nodes include disaggregated implementations or portions thereof. For example, in some embodiments, the telecommunication network 902 includes one or more Open-RAN (ORAN) network nodes. An ORAN network node is a node in the telecommunication network 902 that supports an ORAN specification (e.g., a specification published by the O-RAN Alliance, or any similar organization) and may operate alone or together with other nodes to implement one or more functionalities of any node in the telecommunication network 902, including one or more network nodes 910 and/or core network nodes 908.

Examples of an ORAN network node include an open radio unit (O-RU), an open distributed unit (O-DU), an open central unit (O-CU), including an O-CU control plane (O-CU-CP) or an O-CU user plane (O-CU-UP), a RAN intelligent controller (near-real time or non-real time) hosting software or software plug-ins, such as a near-real time control application (e.g., xApp) or a non-real time control application (e.g., rApp), or any combination thereof (the adjective "open" designating support of an ORAN specification). The network node may support a specification by, for example, supporting an interface defined by the ORAN specification, such as an A1, F1, W1, E1, E2, X2, Xn interface, an open fronthaul user plane interface, or an open fronthaul management plane interface. Moreover, an ORAN access node may be a logical node in a physical node. Furthermore, an ORAN network node may be implemented in a virtualization environment (described further below) in which one or more network functions are virtualized. For example, the virtualization environment may include an O-Cloud computing platform orchestrated by a Service Management and Orchestration Framework via an O-2 interface defined by the O-RAN Alliance or comparable technologies. The network nodes 910 facilitate direct or indirect connection of user equipment (UE), such as by connecting UEs 912a, 912b, 912c, and 912d (one or more of which may be generally referred to as UEs 912) to the core network 906 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 900 may include any number of wired or wireless networks, network nodes, UEs, and/or any other components or systems that may facilitate or participate in the communication of data and/or signals whether via wired or wireless connections. The communication system 900 may include and/or interface with any type of communication, telecommunication, data, cellular, radio network, and/or other similar type of system.

The UEs 912 may be any of a wide variety of communication devices, including wireless devices arranged, configured, and/or operable to communicate wirelessly with the network nodes 910 and other communication devices. Similarly, the network nodes 910 are arranged, capable, configured, and/or operable to communicate directly or indirectly with the UEs 912 and/or with other network nodes or equipment in the telecommunication network 902 to enable and/or provide network access, such as wireless network access, and/or to perform other functions, such as administration in the telecommunication network 902.

In the depicted example, the core network 906 connects the network nodes 910 to one or more hosts, such as host 916. These connections may be direct or indirect via one or more intermediary networks or devices. In other examples, network nodes may be directly coupled to hosts. The core network 906 includes one more core network nodes (e.g., core network node 908) that are structured with hardware and software components. Features of these components may be substantially similar to those described with respect to the UEs, network nodes, and/or hosts, such that the descriptions thereof are generally applicable to the corresponding components of the core network node 908. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 916 may be under the ownership or control of a service provider other than an operator or provider of the access network 904 and/or the telecommunication network 902, and may be operated by the service provider or on behalf of the service provider. The host 916 may host a variety of applications to provide one or more services. Examples of such applications include the provision of live and/or pre-recorded audio/video content, data collection services, for example, retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 900 of Figure 9 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 902 is a cellular network that implements 3GPP standardized features. Accordingly, the telecommunications network 902 may support network slicing to provide different logical networks to different devices that are connected to the telecommunication network 902. For example, the telecommunications network 902 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 912 are configured to transmit and/or receive information without direct human interaction. For instance, a UE may be designed to transmit information to the access network 904 on a predetermined schedule, when triggered by an internal or external event, or in response to requests from the access network 904. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example illustrated in Figure 9, the hub 914 communicates with the access network 904 to facilitate indirect communication between one or more UEs (e.g., UE 912c and/or 912d) and network nodes (e.g., network node 910b). In some examples, the hub 914 may be a controller, router, a content source and analytics node, or any of the other communication devices described herein regarding UEs. For example, the hub 914 may be a broadband router enabling access to the core network 906 for the UEs. As another example, the hub 914 may be a controller that sends commands or instructions to one or more actuators in the UEs. Commands or instructions may be received from the UEs, network nodes 910, or by executable code, script, process, or other instructions in the hub 914. As another example, the hub 914 may be a data collector that acts as temporary storage for UE data and, in some embodiments, may perform analysis or other processing of the data. As another example, the hub 914 may be a content source. For example, for a UE that is a VR headset, display, loudspeaker or other media delivery device, the hub 914 may retrieve VR assets, video, audio, or other media or data related to sensory information via a network node, which the hub 914 then provides to the UE either directly, after performing local processing, and/or after adding additional local content. In still another example, the hub 914 acts as a proxy server or orchestrator for the UEs, in particular if one or more of the UEs are low energy IoT devices.

The hub 914 may have a constant/persistent or intermittent connection to the network node 910b. The hub 914 may also allow for a different communication scheme and/or schedule between the hub 914 and UEs (e.g., UE 912c and/or 912d), and between the hub 914 and the core network 906. In other examples, the hub 914 is connected to the core network 906 and/or one or more UEs via a wired connection. Moreover, the hub 914 may be configured to connect to an M2M service provider over the access network 904 and/or to another UE over a direct connection. In some scenarios, UEs may establish a wireless connection with the network nodes 910 while still connected via the hub 914 via a wired or wireless connection. In some embodiments, the hub 914 may be a dedicated hub - that is, a hub whose primary function is to route communications to/from the UEs from/to the network node 910b. In other embodiments, the hub 914 may be a non-dedicated hub - that is, a device which is capable of operating to route communications between the uEs and network node 910b, but which is additionally capable of operating as a communication start and/or end point for certain data channels.

**Figure 10** shows a UE 1000 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless camera, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle, vehicle-mounted or vehicle embedded/integrated wireless device, etc. Other examples include any UE identified by the ^{3r}d Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1000 includes processing circuitry 1002 that is operatively coupled via a bus 1004 to an input/output interface 1006, a power source 1008, a memory 1010, a communication interface 1012, and/or any other component, or any combination thereof. Certain UEs may utilize all or a subset of the components shown in Figure 10. The level of integration between the components may vary from one UE to another UE. Further, certain UEs may contain multiple instances of a component, such as multiple processors, memories, transceivers, transmitters, receivers, etc.

The processing circuitry 1002 is configured to process instructions and data and may be configured to implement any sequential state machine operative to execute instructions stored as machine-readable computer programs in the memory 1010. The processing circuitry 1002 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1002 may include multiple central processing units (CPUs). The processing circuitry 1002 may be operable to provide, either alone or in conjunction with other UE 1000 components, such as the memory 1010, UE 1000 functionality. For example, the processing circuitry 1002 may be configured to cause the UE 1002 to perform the methods as described with reference to Figures 3, 5 and/or 7.

In the example, the input/output interface 1006 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1000. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1008 is structured as a battery or battery pack. Other types of power sources, such as an external power source (e.g., an electricity outlet), photovoltaic device, or power cell, may be used. The power source 1008 may further include power circuitry for delivering power from the power source 1008 itself, and/or an external power source, to the various parts of the UE 1000 via input circuitry or an interface such as an electrical power cable. Delivering power may be, for example, for charging of the power source 1008. Power circuitry may perform any formatting, converting, or other modification to the power from the power source 1008 to make the power suitable for the respective components of the UE 1000 to which power is supplied.

The memory 1010 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1010 includes one or more application programs 1014, such as an operating system, web browser application, a widget, gadget engine, or other application, and corresponding data 1016. The memory 1010 may store, for use by the UE 1000, any of a variety of various operating systems or combinations of operating systems.

The memory 1010 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1010 may allow the UE 1000 to access instructions, application programs and the like, stored on transitory or non-transitory memory media, to off-load data, or to upload data. An article of manufacture, such as one utilizing a communication system may be tangibly embodied as or in the memory 1010, which may be or comprise a device-readable storage medium.

The processing circuitry 1002 may be configured to communicate with an access network or other network using the communication interface 1012. The communication interface 1012 may comprise one or more communication subsystems and may include or be communicatively coupled to an antenna 1022. The communication interface 1012 may include one or more transceivers used to communicate, such as by communicating with one or more remote transceivers of another device capable of wireless communication (e.g., another UE or a network node in an access network). Each transceiver may include a transmitter 1018 and/or a receiver 1020 appropriate to provide network communications (e.g., optical, electrical, frequency allocations, and so forth). Moreover, the transmitter 1018 and receiver 1020 may be coupled to one or more antennas (e.g., antenna 1022) and may share circuit components, software or firmware, or alternatively be implemented separately.

In some embodiments, communication functions of the communication interface 1012 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1012, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or controls a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are devices which are or which are embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence on the intended application of the IoT device in addition to other components as described in relation to the UE 1000 shown in Figure 10.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

**Figure 11** shows a network node 1100 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)), O-RAN nodes or components of an O-RAN node (e.g., O-RU, O-DU, O-CU).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units, distributed units (e.g., in an O-RAN access node) and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1100 includes processing circuitry 1102, a memory 1104, a communication interface 1106, and a power source 1108, and/or any other component, or any combination thereof. The network node 1100 may be composed of multiple physically separate components (e.g., a NodeB component and a RNC component, or a BTS component and a BSC component, etc.), which may each have their own respective components. In certain scenarios in which the network node 1100 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1100 may be configured to support multiple radio access technologies (RATs). In such embodiments, some components may be duplicated (e.g., separate memory 1104 for different RATs) and some components may be reused (e.g., a same antenna 1110 may be shared by different RATs). The network node 1100 may also include multiple sets of the various illustrated components for different wireless technologies integrated into network node 1100, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1100.

The processing circuitry 1102 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1100 components, such as the memory 1104, network node 1100 functionality. For example, the processing circuitry 1102 may be configured to cause the network node to perform the methods as described with reference to Figures 4, 6 and/or 8.

In some embodiments, the processing circuitry 1102 includes a system on a chip (SOC). In some embodiments, the processing circuitry 1102 includes one or more of radio frequency (RF) transceiver circuitry 1112 and baseband processing circuitry 1114. In some embodiments, the radio frequency (RF) transceiver circuitry 1112 and the baseband processing circuitry 1114 may be on separate chips (or sets of chips), boards, or units, such as radio units and digital units. In alternative embodiments, part or all of RF transceiver circuitry 1112 and baseband processing circuitry 1114 may be on the same chip or set of chips, boards, or units.

The memory 1104 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1102. The memory 1104 may store any suitable instructions, data, or information, including a computer program, software, an application including one or more of logic, rules, code, tables, and/or other instructions capable of being executed by the processing circuitry 1102 and utilized by the network node 1100. The memory 1104 may be used to store any calculations made by the processing circuitry 1102 and/or any data received via the communication interface 1106. In some embodiments, the processing circuitry 1102 and memory 1104 is integrated.

The communication interface 1106 is used in wired or wireless communication of signaling and/or data between a network node, access network, and/or UE. As illustrated, the communication interface 1106 comprises port(s)/terminal(s) 1116 to send and receive data, for example to and from a network over a wired connection. The communication interface 1106 also includes radio front-end circuitry 1118 that may be coupled to, or in certain embodiments a part of, the antenna 1110. Radio front-end circuitry 1118 comprises filters 1120 and amplifiers 1122. The radio front-end circuitry 1118 may be connected to an antenna 1110 and processing circuitry 1102. The radio front-end circuitry may be configured to condition signals communicated between antenna 1110 and processing circuitry 1102. The radio front-end circuitry 1118 may receive digital data that is to be sent out to other network nodes or UEs via a wireless connection. The radio front-end circuitry 1118 may convert the digital data into a radio signal having the appropriate channel and bandwidth parameters using a combination of filters 1120 and/or amplifiers 1122. The radio signal may then be transmitted via the antenna 1110. Similarly, when receiving data, the antenna 1110 may collect radio signals which are then converted into digital data by the radio front-end circuitry 1118. The digital data may be passed to the processing circuitry 1102. In other embodiments, the communication interface may comprise different components and/or different combinations of components.

In certain alternative embodiments, the network node 1100 does not include separate radio front-end circuitry 1118, instead, the processing circuitry 1102 includes radio front-end circuitry and is connected to the antenna 1110. Similarly, in some embodiments, all or some of the RF transceiver circuitry 1112 is part of the communication interface 1106. In still other embodiments, the communication interface 1106 includes one or more ports or terminals 1116, the radio front-end circuitry 1118, and the RF transceiver circuitry 1112, as part of a radio unit (not shown), and the communication interface 1106 communicates with the baseband processing circuitry 1114, which is part of a digital unit (not shown).

The antenna 1110 may include one or more antennas, or antenna arrays, configured to send and/or receive wireless signals. The antenna 1110 may be coupled to the radio front-end circuitry 1118 and may be any type of antenna capable of transmitting and receiving data and/or signals wirelessly. In certain embodiments, the antenna 1110 is separate from the network node 1100 and connectable to the network node 1100 through an interface or port.

The antenna 1110, communication interface 1106, and/or the processing circuitry 1102 may be configured to perform any receiving operations and/or certain obtaining operations described herein as being performed by the network node. Any information, data and/or signals may be received from a UE, another network node and/or any other network equipment. Similarly, the antenna 1110, the communication interface 1106, and/or the processing circuitry 1102 may be configured to perform any transmitting operations described herein as being performed by the network node. Any information, data and/or signals may be transmitted to a UE, another network node and/or any other network equipment.

The power source 1108 provides power to the various components of network node 1100 in a form suitable for the respective components (e.g., at a voltage and current level needed for each respective component). The power source 1108 may further comprise, or be coupled to, power management circuitry to supply the components of the network node 1100 with power for performing the functionality described herein. For example, the network node 1100 may be connectable to an external power source (e.g., the power grid, an electricity outlet) via an input circuitry or interface such as an electrical cable, whereby the external power source supplies power to power circuitry of the power source 1108. As a further example, the power source 1108 may comprise a source of power in the form of a battery or battery pack which is connected to, or integrated in, power circuitry. The battery may provide backup power should the external power source fail.

Embodiments of the network node 1100 may include additional components beyond those shown in Figure 11 for providing certain aspects of the network node's functionality, including any of the functionality described herein and/or any functionality necessary to support the subject matter described herein. For example, the network node 1100 may include user interface equipment to allow input of information into the network node 1100 and to allow output of information from the network node 1100. This may allow a user to perform diagnostic, maintenance, repair, and other administrative functions for the network node 1100.

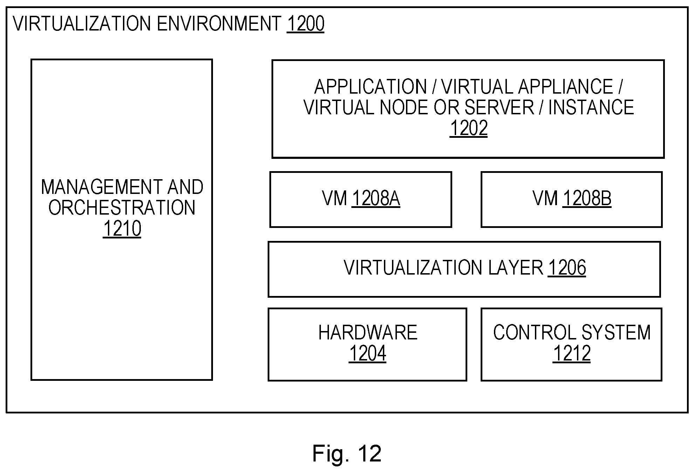

**Figure 12** is a block diagram illustrating a virtualization environment 1200 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1200 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized. In some embodiments, the virtualization environment 1200 includes components defined by the O-RAN Alliance, such as an O-Cloud environment orchestrated by a Service Management and Orchestration Framework via an O-2 interface.

Applications 1202 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1204 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1206 (also referred to as hypervisors or virtual machine monitors (VMMs)), provide VMs 1208a and 1208b (one or more of which may be generally referred to as VMs 1208), and/or perform any of the functions, features and/or benefits described in relation with some embodiments described herein. The virtualization layer 1206 may present a virtual operating platform that appears like networking hardware to the VMs 1208.

The VMs 1208 comprise virtual processing, virtual memory, virtual networking or interface and virtual storage, and may be run by a corresponding virtualization layer 1206. Different embodiments of the instance of a virtual appliance 1202 may be implemented on one or more of VMs 1208, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1208 may be a software implementation of a physical machine that runs programs as if they were executing on a physical, non-virtualized machine. Each of the VMs 1208, and that part of hardware 1204 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1208 on top of the hardware 1204 and corresponds to the application 1202.

Hardware 1204 may be implemented in a standalone network node with generic or specific components. Hardware 1204 may implement some functions via virtualization. Alternatively, hardware 1204 may be part of a larger cluster of hardware (e.g. such as in a data center or CPE) where many hardware nodes work together and are managed via management and orchestration 1210, which, among others, oversees lifecycle management of applications 1202. In some embodiments, hardware 1204 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1212 which may alternatively be used for communication between hardware nodes and radio units.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

## Claims

1. A method for a user equipment, UE (912, 1000), the method comprising:
Transmitting (702), to a network node, random access information relating to a random access procedure comprising a fourth indication indicating that a number of failed transmission attempts of a random access preamble have been experienced after a last successful transmission attempt of the random access preamble in a first beam before selecting a second beam for preamble transmission in the random access procedure.

2. The method of any one of claim 1, where the fourth indication indicates whether the last successful transmission attempt of the random access preamble was a last transmission attempt of the random access preamble before selecting the second beam.

3. The method of claim 2 wherein the fourth indication comprises an implicit indication.

4. The method of claim 3 wherein the fourth indication comprises an absence of a flag.

5. The method of claim 1, where the fourth indication indicates if a last transmission attempt of the random access preamble in a first beam before selecting a second beam for preamble transmission failed.

6. The method of any one of claims 5, wherein the fourth indication comprises a flag.

7. The method of any one of claims 1 to 4, wherein the fourth indication indicates a number of successive failed transmission attempts of the random access preamble after the last successful attempt of transmission of the random access preamble.

8. A method for a network node (910, 1100), the method comprising:
Receiving (802) from a user equipment, random access information relating to a random access procedure comprising a fourth indication indicating that a number of failed transmission attempts of a random access preamble have been experienced by the user equipment (912, 1000) after a last successful transmission attempt of the random access preamble by the user equipment (912, 1000) in a first beam before the user equipment (912, 1000)selected a second beam for preamble transmission in the random access procedure.

9. The method of claim 8, wherein the fourth indication indicates whether the last successful transmission attempt of the random access preamble was a last transmission attempt of the random access preamble before selecting the second beam.

10. The method of claim 9 wherein the fourth indication comprises an implicit indication.

11. The method of claim 10 wherein the fourth indication comprises an absence of a flag.

12. A user equipment (912, 1000) wherein the user equipment (912, 1000) is adapted to:
transmit, to a network node (910, 1100), random access information relating to a random access procedure comprising a fourth indication indicating that -a number of failed transmission attempts of a random access preamble have been experienced after a last successful transmission attempt of the random access preamble in a first beam before selecting a second beam for preamble transmission in the random access procedure.

13. The user equipment as claimed in claim 12 wherein the user equipment is further adapted to perform the method as claimed in any one of claims 2 to 7.

14. A network node (910, 1100), wherein the network node (910, 1100) is adapted to:
receive from a user equipment (912, 1000), random access information relating to a random access procedure comprising a fourth indication indicating that a number of failed transmission attempts of a random access preamble have been experienced by the user equipment (912, 1000) after a last successful transmission attempt of the random access preamble by the user equipment (912, 1000) in a first beam before the user equipment (912, 1000) selects a second beam for preamble transmission in the random access procedure.

15. The network node (910, 1100) as claimed in claim 14 wherein the network node is further adapted to perform the method as claimed in any one of claims 9 to 11.

## Patentansprüche

1. Verfahren für eine Benutzereinrichtung, UE, (912, 1000), wobei das Verfahren Folgendes umfasst:
Senden (702) von Direktzugriffsinformationen in Bezug auf eine Direktzugriffsprozedur an einen Netzwerkknoten, die eine vierte Angabe umfassen, die eine Anzahl von fehlgeschlagenen Übertragungsversuchen einer Direktzugriffspräambel angibt, dass nach einem letzten erfolgreichen Übertragungsversuch der Direktzugriffspräambel in einem ersten Strahl vor dem Auswählen eines zweiten Strahls zur Präambel-Übertragung in der Direktzugriffsprozedur erlebt worden sind.

2. Verfahren nach Anspruch 1, wobei die vierte Angabe angibt, ob der letzte erfolgreiche Übertragungsversuch der Direktzugriffspräambel ein letzter Übertragungsversuch der Direktzugriffspräambel vor dem Auswählen des zweiten Strahls war.

3. Verfahren nach Anspruch 2, wobei die vierte Angabe eine implizite Angabe umfasst.

4. Verfahren nach Anspruch 3, wobei die vierte Angabe das Fehlen eines Flags umfasst.

5. Verfahren nach Anspruch 1, wobei die vierte Angabe angibt, ob ein letzter Übertragungsversuch der Direktzugriffspräambel in einem ersten Strahl vor dem Auswählen eines zweiten Strahls zur Präambel-Übertragung fehlgeschlagen ist.

6. Verfahren nach Anspruch 5, wobei die vierte Angabe ein Flag umfasst.

7. Verfahren nach einem der Ansprüche 1 bis 4, wobei die vierte Angabe eine Anzahl von nacheinander fehlgeschlagenen Übertragungsversuchen der Direktzugriffspräambel nach dem letzten erfolgreichen Übertragungsversuch der Direktzugriffspräambel angibt.

8. Verfahren für einen Netzwerkknoten (910, 1100), wobei das Verfahren Folgendes umfasst:
Empfangen (802) von Direktzugriffsinformationen in Bezug auf eine Direktzugriffsprozedur von einer Benutzereinrichtung, die eine vierte Angabe umfassen, die eine Anzahl von fehlgeschlagenen Übertragungsversuchen einer Direktzugriffspräambel angibt, dass die Benutzereinrichtung (912, 1000) nach einem letzten erfolgreichen Übertragungsversuch der Direktzugriffspräambel durch die Benutzereinrichtung (912, 1000) in einem ersten Strahl erlebt worden sind, bevor die Benutzereinrichtung (912, 1000) einen zweiten Strahl zur Präambel-Übertragung in der Direktzugriffsprozedur ausgewählt hat.

9. Verfahren nach Anspruch 8, wobei die vierte Angabe angibt, ob der letzte erfolgreiche Übertragungsversuch der Direktzugriffspräambel ein letzter Übertragungsversuch der Direktzugriffspräambel vor dem Auswählen des zweiten Strahls war.

10. Verfahren nach Anspruch 9, wobei die vierte Angabe eine implizite Angabe umfasst.

11. Verfahren nach Anspruch 10, wobei die vierte Angabe das Fehlen eines Flags umfasst.

12. Benutzereinrichtung (912, 1000), wobei die Benutzereinrichtung (912, 1000) zu Folgendem ausgelegt ist:
Senden von Direktzugriffsinformationen in Bezug auf eine Direktzugriffsprozedur an einen Netzwerkknoten (910, 1100), die eine vierte Angabe umfassen, die eine Anzahl von fehlgeschlagenen Übertragungsversuchen einer Direktzugriffspräambel angibt, dass nach einem letzten erfolgreichen Übertragungsversuch der Direktzugriffspräambel in einem ersten Strahl vor dem Auswählen eines zweiten Strahls zur Präambel-Übertragung in der Direktzugriffsprozedur erlebt worden sind.

13. Benutzereinrichtung nach Anspruch 12, wobei die Benutzereinrichtung ferner zum Durchführen des Verfahrens nach einem Ansprüche 2 bis 7 ausgelegt ist.

14. Netzwerkknoten (910, 1100), wobei der Netzwerkknoten (910, 1100) zu Folgendem ausgelegt ist:
Empfangen von Direktzugriffsinformationen in Bezug auf eine Direktzugriffsprozedur von einer Benutzereinrichtung (912, 1000), die eine vierte Angabe umfassen, die eine Anzahl von fehlgeschlagenen Übertragungsversuchen einer Direktzugriffspräambel angibt, dass die Benutzereinrichtung (912, 1000) nach einem letzten erfolgreichen Übertragungsversuch der Direktzugriffspräambel durch die Benutzereinrichtung (912, 1000) in einem ersten Strahl erlebt worden sind, bevor die Benutzereinrichtung (912, 1000) einen zweiten Strahl zur Präambel-Übertragung in der Direktzugriffsprozedur ausgewählt hat.

15. Netzwerkknoten (910, 1100) nach Anspruch 14, wobei der Netzwerkknoten ferner zum Durchführen des Verfahrens nach einem Ansprüche 9 bis 11 ausgelegt ist.

## Revendications

1. Procédé pour un équipement utilisateur, UE (912, 1000), le procédé comprenant :
la transmission (702), à un nœud de réseau, d'informations d'accès aléatoire relatives à une procédure d'accès aléatoire comprenant une quatrième indication indiquant qu'un nombre de tentatives infructueuses de transmission d'un préambule d'accès aléatoire ont été subies après une dernière tentative réussie de transmission du préambule d'accès aléatoire dans un premier faisceau avant la sélection d'un deuxième faisceau pour une transmission de préambule dans la procédure d'accès aléatoire.

2. Procédé selon la revendication 1, dans lequel la quatrième indication indique si la dernière tentative réussie de transmission du préambule d'accès aléatoire était une dernière tentative de transmission du préambule d'accès aléatoire avant la sélection du deuxième faisceau.

3. Procédé selon la revendication 2, dans lequel la quatrième indication comprend une indication implicite.

4. Procédé selon la revendication 3, dans lequel la quatrième indication comprend une absence d'un indicateur.

5. Procédé selon la revendication 1, dans lequel la quatrième indication indique si une dernière tentative de transmission du préambule d'accès aléatoire dans un premier faisceau avant la sélection d'un deuxième faisceau pour une transmission de préambule est infructueuse.

6. Procédé selon la revendication 5, dans lequel la quatrième indication comprend un indicateur.

7. Procédé selon l'une quelconque des revendications 1 à 4, dans lequel la quatrième indication indique un nombre de tentatives infructueuses successives de transmission du préambule d'accès aléatoire après la dernière tentative réussie de transmission du préambule accès aléatoire.

8. Procédé pour un nœud de réseau (910, 1100), le procédé comprenant :
la réception (802), depuis un équipement utilisateur, d'informations d'accès aléatoire relatives à une procédure d'accès aléatoire comprenant une quatrième indication indiquant qu'un nombre de tentatives infructueuses de transmission d'un préambule d'accès aléatoire ont été subies par l'équipement utilisateur (912, 1000) après une dernière tentative réussie de transmission du préambule d'accès aléatoire par l'équipement utilisateur (912, 1000) dans un premier faisceau avant la sélection par l'équipement utilisateur (912, 1000) d'un deuxième faisceau pour une transmission de préambule dans la procédure d'accès aléatoire.

9. Procédé selon la revendication 8, dans lequel la quatrième indication indique si la dernière tentative réussie de transmission du préambule d'accès aléatoire était une dernière tentative de transmission du préambule d'accès aléatoire avant la sélection du deuxième faisceau.

10. Procédé selon la revendication 9, dans lequel la quatrième indication comprend une indication implicite.

11. Procédé selon la revendication 10, dans lequel la quatrième indication comprend une absence d'un indicateur.

12. Equipement utilisateur (912, 1000), dans lequel l'équipement utilisateur (912, 1000) est adapté pour :
transmettre, à un nœud de réseau (910, 1100), des informations d'accès aléatoire relatives à une procédure d'accès aléatoire comprenant une quatrième indication indiquant qu'un nombre de tentatives infructueuses de transmission d'un préambule d'accès aléatoire ont été subies après une dernière tentative réussie de transmission du préambule d'accès aléatoire dans un premier faisceau avant la sélection d'un deuxième faisceau pour une transmission de préambule dans la procédure d'accès aléatoire.

13. Equipement utilisateur selon la revendication 12, dans lequel l'équipement utilisateur est en outre adapté pour réaliser le procédé selon l'une quelconque des revendications 2 à 7.

14. Nœud de réseau (910, 1100), dans lequel le nœud de réseau (910, 1100) est adapté pour :
recevoir, depuis un équipement utilisateur (912, 1000), des informations d'accès aléatoire relatives à une procédure d'accès aléatoire comprenant une quatrième indication indiquant qu'un nombre de tentatives infructueuses de transmission d'un préambule d'accès aléatoire ont été subies par l'équipement utilisateur (912, 1000) après une dernière tentative réussie de transmission du préambule d'accès aléatoire par l'équipement utilisateur (912, 1000) dans un premier faisceau avant la sélection par l'équipement utilisateur (912, 1000) d'un deuxième faisceau pour une transmission de préambule dans la procédure d'accès aléatoire.

15. Nœud de réseau (910, 1100) selon la revendication 14, dans lequel le nœud de réseau est en outre adapté pour réaliser le procédé selon l'une quelconque des revendications 9 à 11.
